# EUROPEAN PATENT APPLICATION

(11) **EP 4 336 907 A1**
(43) Date of publication of application: **13.03.2024**
(21) Application number: 22798938.1
(22) Date of filing: 28.04.2022
(51) Int. Cl.: H04W 52/02, H04W 28/04

(54) **COMMUNICATION DEVICE, BASE STATION, AND METHOD**

(30) Priority: 07.05.2021 JP 2021079343
(71) Applicant: DENSO CORPORATION, Kariya-city, Aichi 448-8661 (JP); TOYOTA JIDOSHA KABUSHIKI KAISHA, Toyota-shi Aichi 471-8571 (JP)
(72) Inventor: HOSHINO, Masayuki, Kariya-city, Aichi 448-8661 (JP); TAKAHASHI, Hideaki, Kariya-city, Aichi 448-8661 (JP)
(74) Representative: TBK
(86) International application number: PCT/JP2022/019434
(87) International publication number: WO 2022/234834

(57) **Abstract**

A communication apparatus (100) comprises: a communicator (110) configured to receive, from a base station (200), a radio resource control (RRC) message including information configuring a skipping duration during which monitoring of a physical downlink control channel (PDCCH) is skipped, and to receive, from the base station (200) and through the PDCCH, downlink control information (DCI) including an information field related to the monitoring of the PDCCH; and a controller (120) configured to control, based on a value set in the information field, skipping of the monitoring of the PDCCH over the skipping duration. The controller (120) is configured to perform control so as not to execute the skipping of the monitoring of the PDCCH while a timer is in operation, the timer being related to retransmission for a discontinuous reception (DRX) operation.

## Description

### Cross-Reference to Related Applications

The present application is based on and claims the benefit of priority of Japanese Patent Application No. 2021-079343, filed on May 7, 2021, the entire contents of which are incorporated herein by reference.

### Technical Field

The present disclosure relates to a communication apparatus, a base station, and a method used in a mobile communication system.

### Background Art

In recent years, in the 3rd generation partnership project (3GPP) (registered trademark, the same applies hereinafter), which is a standardization project of a mobile communication system, it has been studied to introduce, into the 5th generation (5G) system, a power saving technology for reducing power consumption of a user equipment in the radio resource control (RRC) connected state (refer to, for example, Non Patent Literature 1).

For example, in order to reduce power consumption necessary for monitoring a physical downlink control channel (PDCCH) in a user equipment, it has been studied to lengthen a period of a search space corresponding to a candidate timing at which the PDCCH is provided or to switch to a state in which monitoring of the PDCCH in the search space is skipped (hereinafter, appropriately referred to as a "power saving state").

Particularly, by dynamically switching to the power saving state within an active time in discontinuous reception (DRX) of the radio resource control (RRC) connected state, it is possible to obtain a larger effect of power consumption reduction than that of power consumption reduction by DRX.

### Citation List

### Non Patent Literature

Non Patent Literature 1: 3GPP ContributionRP-200938 "Revised WID UE Power Saving Enhancements for NR"

### Summary of Invention

In a first aspect, a communication apparatus comprises: a communicator configured to receive, from a base station, a radio resource control (RRC) message including information configuring a skipping duration during which monitoring of a physical downlink control channel (PDCCH) is skipped, and to receive, from the base station and through the PDCCH, downlink control information (DCI) including an information field related to the monitoring of the PDCCH; and a controller configured to control, based on a value set in the information field, skipping of the monitoring of the PDCCH over the skipping duration. The controller is configured to perform control so as not to execute the skipping of the monitoring of the PDCCH while a timer is in operation, the timer being related to retransmission for a discontinuous reception (DRX) operation.

In a second aspect, a base station comprises: a communicator configured to transmit, to a communication apparatus, a radio resource control (RRC) message including information configuring a skipping duration during which monitoring of a physical downlink control channel (PDCCH) is skipped, and to transmit, to the communication apparatus and through the PDCCH, downlink control information (DCI) including an information field related to the monitoring of the PDCCH; and a controller configured to control, based on a value set in the information field, skipping of the monitoring of the PDCCH over the skipping duration. The controller is configured to perform control so as not to execute the skipping of the monitoring of the PDCCH while a timer is in operation, the timer being related to retransmission for a discontinuous reception (DRX) operation.

In a third aspect, a method executed by a communication apparatus, the method comprises the steps of: receiving, from a base station, a radio resource control (RRC) message including information configuring a skipping duration during which monitoring of a physical downlink control channel (PDCCH) is skipped; receiving, from the base station and through the PDCCH, downlink control information (DCI) including an information field related to the monitoring of the PDCCH; and controlling, based on a value set in the information field, skipping of the monitoring of the PDCCH over the skipping duration. Control is performed, in the controlling step, so as not to execute the skipping of the monitoring of the PDCCH while a timer is in operation, the timer being related to retransmission for a discontinuous reception (DRX) operation.

In a fourth aspect, a method executed by a base station, the method comprises the steps of: transmitting, to a communication apparatus, a radio resource control (RRC) message including information configuring a skipping duration during which monitoring of a physical downlink control channel (PDCCH) is skipped; transmitting, to the communication apparatus and through the PDCCH, downlink control information (DCI) including an information field related to the monitoring of the PDCCH; and controlling, based on a value set in the information field, skipping of the monitoring of the PDCCH over the skipping duration. Control is performed, in the controlling step, so as not to execute the skipping of the monitoring of the PDCCH while a timer is in operation, the timer being related to retransmission for a discontinuous reception (DRX) operation.

### Brief Description of Drawings

The above and other objects, features, and advantages of the present disclosure will become more apparent from the following detailed description with reference to the accompanying drawings. The drawings are as follows.
Fig. 1 is a diagram illustrating a configuration of a mobile communication system according to an embodiment.
Fig. 2 is a diagram illustrating a configuration example of a protocol stack according to the embodiment.
Fig. 3 is a diagram illustrating an outline of a radio communication operation according to the embodiment.
Fig. 4 is a diagram illustrating an outline of PDCCH skipping according to the embodiment.
Fig. 5 is a diagram illustrating an outline of search space set switching (SSSG switching) according to the embodiment.
Fig. 6 is a diagram illustrating a DRX and a power saving state according to the embodiment.
Fig. 7 is a diagram illustrating a configuration of a UE according to the embodiment.
Fig. 8 is a diagram illustrating a configuration of a base station according to the embodiment.
Fig. 9 is a diagram illustrating a first operation example of the embodiment.
Fig. 10 is a diagram illustrating the first operation example focusing on a downlink.
Fig. 11 is a diagram illustrating the first operation example focusing on an uplink.
Fig. 12 is a diagram illustrating a second operation example according to the embodiment.
Fig. 13 is a diagram illustrating a third operation example according to the embodiment.
Fig. 14 is a diagram illustrating a first configuration example of an information element included in an RRC message in the third operation example.
Fig. 15 is a diagram illustrating the first configuration example of the information element included in the RRC message in the third operation example.
Fig. 16 is a diagram illustrating a second configuration example of the information element included in the RRC message in the third operation example.
Fig. 17 is a diagram illustrating the second configuration example of the information element included in the RRC message in the third operation example.
Fig. 18 is a diagram illustrating a fourth operation example according to the embodiment.
Fig. 19 is a diagram illustrating a specific example 1 of an operation using a switching timer according to the fourth operation example.
Fig. 20 is a diagram illustrating a specific example 2 of the operation using the switching timer according to the fourth operation example.

### Description of Embodiments

It is assumed that downlink control information (DCI) indicating a radio resource allocated from a base station to a user equipment is used as a switching instruction instructing switching to a power saving state. Such DCI is referred to as a scheduling DCI. When the scheduling DCI instructs the user equipment to switch to the power saving state, transmission and reception of data occur between the base station and the user equipment, and data retransmission processing by hybrid automatic repeat request (HARQ) may be required. As a result of detailed studies by the inventor, it has been found that HARQ processing cannot be appropriately performed when the user equipment immediately starts switching to the power saving state in response to reception of the scheduling DCI instructing switching to the power saving state.

Therefore, an object of the present disclosure is to enable data retransmission processing by HARQ to be appropriately performed even in a case where a scheduling DCI is used as a switching instruction indicating switching to a power saving state.

With reference to the drawings, a mobile communication system according to an embodiment is described. In the description of the drawings, identical or similar parts are marked with identical or similar reference numerals.

### (System configuration)

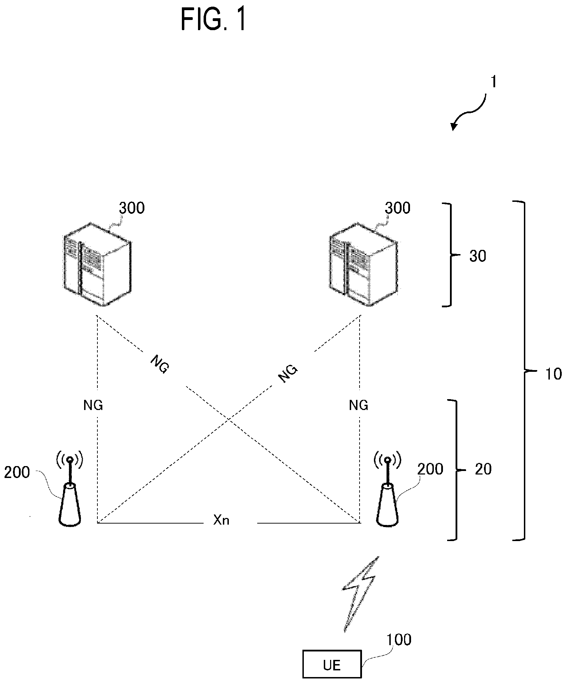

First, a configuration of a mobile communication system 1 according to the present embodiment will be described with reference to Fig. 1. The mobile communication system 1 is, for example, a system conforming to a technical specification (TS) of 3GPP. Hereinafter, as the mobile communication system 1, a description will be given, as an example, as to a fifth generation system (5th generation system: 5GS) of the 3GPP standard, that is, a mobile communication system based on new radio (NR).

The mobile communication system 1 includes a network 10 and a user equipment (UE) 100 that communicates with the network 10. The network 10 includes a next generation radio access network (NG-RAN) 20, which is a 5G radio access network, and a 5G core network (5GC) 30, which is a 5G core network.

The UE 100 is an equipment used by a user. The UE 100 is, for example, a mobile apparatus such as a mobile phone terminal such as a smartphone, a tablet terminal, a notebook PC, a communication module, or a communication card. The UE 100 may be a vehicle (for example, a car, a train, or the like) or a device provided in the vehicle. The UE 100 may be a transport body other than a vehicle (for example, a ship, an airplane, or the like) or a device provided in the transport body. The UE 100 may be a sensor or a device provided in the sensor. It is noted that the UE 100 may be referred to as another name such as a mobile station, a mobile terminal, a mobile apparatus, a mobile unit, a subscriber station, a subscriber terminal, a subscriber apparatus, a subscriber unit, a wireless station, a wireless terminal, a wireless apparatus, a wireless unit, a remote station, a remote terminal, a remote apparatus, or a remote unit.

The NG-RAN 20 includes a plurality of base stations 200. Each of the base stations 200 manages at least one cell. A cell forms a minimum unit of a communication area. One cell belongs to one frequency (a carrier frequency) and is formed by one component carrier. The term "cell" may represent a radio communication resource, and may also represent a communication target of the UE 100. Each base station 200 can perform radio communication with the UE 100 existing in its own cell. The base station 200 communicates with the UE 100 by using a protocol stack of a radio access network (RAN). The base station 200 provides NR user plane and control plane protocol terminations towards the UE 100 and is connected to the 5GC 30 via an NG interface. Such an NR base station 200 may be referred to as a gNodeB (gNB).

The 5GC 30 includes a core network apparatus 300. The core network apparatus 300 includes, for example, an access and mobility management function (AMF) and/or a user plane function (UPF). The AMF performs mobility management of the UE 100. The UPF provides a function specialized for user plane processing. The AMF and the UPF are connected to the base station 200 via the NG interface.

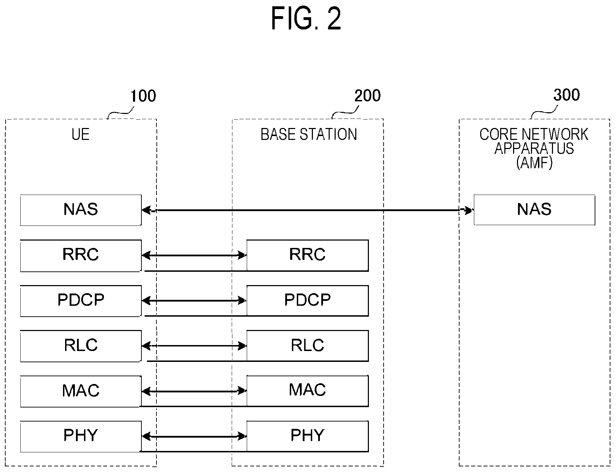

Next, a configuration example of the protocol stack according to the present embodiment will be described with reference to Fig. 2.

A protocol of a radio section between the UE 100 and the base station 200 includes a physical (PHY) layer, a medium access control (MAC) layer, a radio link control (RLC) layer, a packet data convergence protocol (PDCP) layer, and an RRC layer.

The PHY layer performs encoding/decoding, modulation/demodulation, antenna mapping/demapping, and resource mapping/demapping. Data and control information are transmitted, via a physical channel, between the PHY layer of the UE 100 and the PHY layer of the base station 200.

The MAC layer performs data priority control, retransmission processing by hybrid ARQ (HARQ), a random access procedure, and the like. Data and control information are transmitted, via a transport channel, between the MAC layer of the UE 100 and the MAC layer of the base station 200. The MAC layer of the base station 200 includes a scheduler. The scheduler determines uplink and downlink transport formats (transport block size, modulation and coding scheme (MCS)) and an allocated resource to the UE 100.

The RLC layer transmits data to the RLC layer on the reception side using the functions of the MAC layer and the PHY layer. Data and control information are transmitted, via a logical channel, between the RLC layer of the UE 100 and the RLC layer of the base station 200.

The PDCP layer performs header compression/decompression and encryption/decryption.

A service data adaptation protocol (SDAP) layer may be provided as a higher layer of the PDCP layer. The service data adaptation protocol (SDAP) layer performs mapping between an IP flow, which is a unit in which a core network performs QoS control, and a radio bearer, which is a unit in which an access stratum (AS) performs QoS control.

The RRC layer controls a logical channel, a transport channel, and a physical channel according to establishment, reestablishment, and release of the radio bearer. RRC signaling for various configurations is transmitted between the RRC layer of the UE 100 and the RRC layer of the base station 200. In a case where there is an RRC connection between the RRC of the UE 100 and the RRC of the base station 200, the UE 100 is in an RRC connected state. In a case where there is no RRC connection between the RRC of the UE 100 and the RRC of the base station 200, the UE 100 is in an RRC idle state. In a case where the RRC connection between the RRC of the UE 100 and the RRC of the base station 200 is suspended, the UE 100 is in an RRC inactive state.

An NAS layer located above the RRC layer performs session management and mobility management of the UE 100. NAS signaling is transmitted between the NAS layer of the UE 100 and the NAS layer of the core network apparatus 300 (AMF). It is noted that the UE 100 has an application layer and the like in addition to the protocol of the radio interface.

### (Outline of radio communication operation)

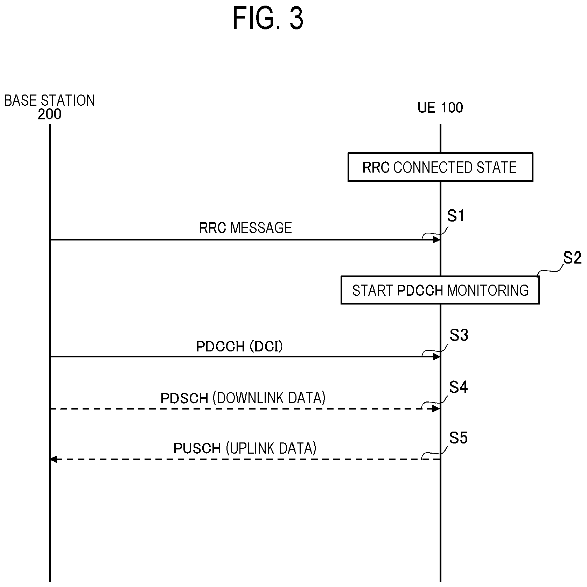

Next, an outline of a radio communication operation according to the present embodiment will be described with reference to Fig. 3. In the present embodiment, a search space may be referred to as a search space set.

The base station 200 configures, in the UE 100, a search space corresponding to a candidate timing at which a PDCCH is provided. The UE 100 in the RRC connected state monitors the PDCCH in the configured search space and receives downlink control information (DCI) carried on the PDCCH. Then, the UE 100 receives a physical downlink shared channel (PDSCH) and/or transmits a physical uplink shared channel (PUSCH) according to resource allocation (scheduling) indicated by DCI. For example, the UE 100 may monitor a set of candidates of the PDCCH according to the corresponding search space. That is, the UE 100 may monitor, according to the corresponding search space, the set of candidates of the PDCCH in a control resource set (CORESET) of a downlink BWP (DL BWP: BandWidth Part) in a serving cell in which the monitoring of the PDCCH is configured. Here, the monitoring may indicate decoding each of the candidates of the PDCCH according to a monitored DCI format.

As illustrated in Fig. 3, in step S1, the base station 200 transmits, to the UE 100, an RRC message including configuration information related to the PDCCH (PDCCH configuration information), and performs, on the UE 100, various configurations related to the PDCCH. The RRC message may be an RRC message specific for the UE such as an RRC reconfiguration message. Here, among the configurations related to the PDCCH, a search space configuration includes a search space period (also referred to as a PDCCH monitoring period), a search space offset (also referred to as a PDCCH monitoring offset), search space duration (for example, the number of consecutive slots), a symbol for PDCCH monitoring, an aggregation level, a type of search space, a DCI format, and the like. Here, each of the search spaces (each of the configurations of the search space) may be associated with one CORESET. The search space configuration may be configured for each of one or a plurality of DL BWPs. Here, the type of search space may include a UE-specific search space (USS) and/or a UE-common search space (CS S).

The DCI format includes a scheduling DCI format used for scheduling of the PDSCH or the PUSCH and a non-scheduling DCI format not used for such scheduling. The DCI transmitted in the scheduling DCI format is referred to as a scheduling DCI, and the DCI transmitted in the non-scheduling DCI format is referred to as a non-scheduling DCI.

The scheduling DCI format includes a downlink DCI format (for example, a DCI format 1_0, a DCI format 1_1, and a DCI format 1_2) used for scheduling of PDSCH and an uplink DCI format (for example, a DCI format 0_0, a DCI format 0_1, and a DCI format 0_2) used for scheduling of PUSCH. The scheduling DCI may be a UE specific DCI that is individually transmitted to the UE. For example, the scheduling DCI may be transmitted by applying a radio network temporary identifier (RNTI) individually allocated to the UE.

On the other hand, examples of the non-scheduling DCI format include a DCI format 2_0 and a DCI format 2_6. The non-scheduling DCI may be a DCI that can be simultaneously transmitted to a plurality of UEs 100. For example, the non-scheduling DCI may be transmitted by applying a common RNTI to the plurality of UEs 100.

In step S2, the UE 100 starts monitoring of the PDCCH in the search space configured from the base station 200. For example, each of the DCI format 1_0, the DCI format 0_0, the DCI format 1_1, the DCI format 0_1, the DCI format 1_2, and the DCI format 0_2 is configured in the UE 100. Then, the UE 100 monitors the PDCCH (DCI) based on the configuration. For example, the base station 200 may configure the UE 100 so as to allow the UE 100 to monitor the DCI format 1_0 and the DCI format 0_0 in a certain search space. Further, the base station 200 may configure the UE 100 so as to allow the UE 100 to monitor the DCI format 1_1 and the DCI format 0_1 in a certain search space. Further, the base station 200 may configure the UE 100 so as to allow the UE 100 to monitor the DCI format 1_2 and the DCI format 0_2 in a certain search space. That is, for example, in a case where a CSS is configured for a certain search space, the base station 200 may configure the UE 100 so as to allow the UE 100 to monitor candidates of the PDCCH for the DCI format 1_0 and the DCI format 0_0. Furthermore, in a case where the CSS is configured for a certain search space, the base station 200 may configure the UE 100 so as to allow the UE 100 to monitor candidates of the PDCCH for the DCI format 2_0. Further, in a case where the USS is configured for a certain search space, the base station 200 may configure the UE 100 so as to allow the UE 100 to monitor candidates of the PDCCH for the DCI format 1_0 and the DCI format 0_0 or the DCI format 1_1 and the DCI format 0_1. Further, in a case where the USS is configured for a certain search space, the base station 200 may configure the UE 100 so as to allow the UE 100 to monitor candidates of the PDCCH for the DCI format 1_0 and the DCI format 0_0 or the DCI format 1_2 and the DCI format 0_2.

In step S3, the UE 100 receives and detects a DCI addressed to its own UE from the base station 200. For example, the UE 100 performs blind decoding of the PDCCH using a cell-radio network temporary identifier (C-RNTI) and a modulation and coding scheme-C-RNTI (MCS-C-RNTI) or a configured scheduling-RNTI (CS-RNTI) allocated from the base station 200 to the UE 100, and obtains a DCI which has been successfully decoded as a DCI addressed to its own UE. Here, a CRC parity bit scrambled by the C-RNTI and the MCS-C-RNTI or the CS-RNTI is attached to the DCI transmitted from the base station 200.

When the DCI indicates scheduling of the PDSCH, in step S4, the UE 100 receives downlink data from the base station 200 with the scheduled PDSCH.

When the DCI indicates scheduling of the PUSCH, in step S5, the UE 100 transmits uplink data to the base station 200 with the scheduled PUSCH.

### (Outline of power saving technology)

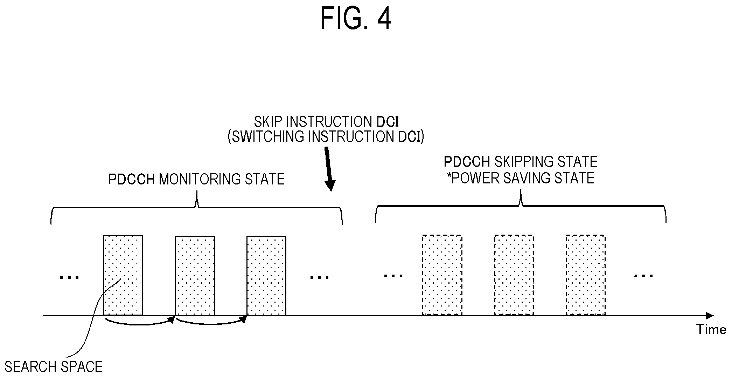

Next, an outline of PDCCH skipping according to the present embodiment will be described with reference to Fig. 4. Hereinafter, it is assumed that the UE 100 is in the RRC connected state.

First, the UE 100 monitors a PDCCH provided in a designated period in a search space based on a search space configuration configured by the base station 200. Such a PDCCH monitoring state is an example of a first state.

Second, the base station 200 transmits, to the UE 100, a skip instruction DCI instructing the UE 100 to perform PDCCH skipping. The skip instruction DCI is an example of a switching instruction DCI. The skip instruction DCI is a scheduling DCI or a non-scheduling DCI, but in the present embodiment, the same is mainly assumed that the scheduling DCI is used as the skip instruction DCI.

Third, the UE 100 skips the monitoring of the PDCCH for a designated duration in response to the reception of the skip instruction DCI from the base station 200. Such a PDCCH skipping state is an example of a second state (a power saving state). The designated duration during which the monitoring of the PDCCH is skipped may be set by higher layer signaling (an RRC message). The designated duration may be determined by a timer value (that is, a setting value of a switching timer), or may be determined by the number of consecutive slots or the number of consecutive search spaces.

With such PDCCH skipping, power consumption required for the UE 100 to monitor the PDCCH is reduced, thereby making it possible to achieve dynamic power saving.

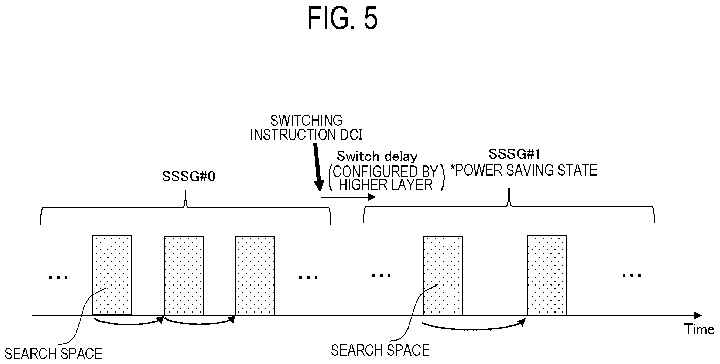

Next, an outline of search space set switching according to the present embodiment will be described with reference to Fig. 5.

First, the base station 200 configures a plurality of search space sets, which are a set of configurations related to a search space, in the UE 100 by higher layer signaling (the RRC message). Such a set of configurations related to the search space is referred to as a search space set (SSS) or a search space set group (SSSG), and hereinafter, the same is mainly referred to as the SSSG. One SSSG includes one or a plurality of search space configurations and is identified by an index of the SSSG. Here, the base station 200 configures, in the UE 100, SSSG#0 (a first search space set) in which a search space is provided in a designated period and SSSG#1 (a second search space set) in which a search space is provided in a period longer than the designated period. Here, a description will be given as to an example in which the base station 200 configures two SSSGs including the SSSG#0 and the SSSG#1 in the UE 100, but three or more SSSGs may be configured in the UE 100 for each of one or a plurality of BWPs (for example, DL BWP). It is noted that configuring a plurality of BWPs (or three or more SSSGs) in the UE 100 may mean configuring a plurality of SSSGs (or three or more SSSGs) for one BWP. Configuring a plurality of BWPs (or three or more SSSGs) in the UE 100 may mean configuring a plurality of SSSGs (or three or more SSSGs) for a plurality of BWPs.

Second, the UE 100 monitors, based on the SSSG#0, the PDCCH provided in the designated period in the search space. Such a state to which the SSSG#0 is applied is an example of the first state.

Third, the base station 200 transmits, to the UE 100, a switching instruction DCI instructing SSSG switching. The skip instruction DCI is a scheduling DCI or a non-scheduling DCI, but in the present embodiment, it is mainly assumed that the scheduling DCI is used as the switching instruction DCI. That is, the base station 200 instructs the UE 100 to switch from the SSSG#0 to the SSSG#1 by using the scheduling DCI.

Fourth, the UE 100 starts switching to the SSSG#1 in response to reception of the switching instruction DCI. The UE 100 performs switching to the SSSG#1 in a symbol after a switching delay time (switch delay) from the last symbol of the PDCCH in the SSSG#0. Such a switching delay time is configured from the base station 200 to the UE 100 by higher layer signaling (the RRC message).

Fifth, the UE 100 monitors, based on the SSSG#1, the PDCCH provided in a period longer than the designated period in the search space. Such a state to which the SSSG#1 is applied is an example of the second state (the power saving state).

By such search space set switching, power consumption necessary for the UE 100 to monitor the PDCCH is reduced, thereby making it possible to achieve dynamic power saving.

It is noted that switching from the SSSG#1 to the SSSG#0 may be instructed by the base station 200 using a DCI, similarly to the switching from the SSSG#0 to the SSSG#1, or the UE 100 may perform the switching from the SSSG#1 to the SSSG#0 using a timer. A timer value of such a switching timer is configured, from the base station 200, in the UE 100 using higher layer signaling (the RRC message). In response to the detection of the switching instruction DCI indicating switching to the SSSG#1, the UE 100 starts monitoring of the PDCCH in the SSSG#1, sets a value of the switching timer to a value set by the higher layer, and starts the switching timer. The UE 100 decrements the value of the switching timer, stops monitoring of the PDCCH in the SSSG#1 when the switching timer expires, and starts monitoring of the PDCCH in the SSSG#0 after the switching delay time (switch delay). Here, each of "#0" in the SSSG#0 and "#1" in the SSSG#1 indicates an index (also referred to as a search space group ID) for a set (a group) of search spaces. That is, one or a plurality of search space sets may be associated with a set (a group) of search spaces identified by an index. For example, the base station 200 may configure, in the UE 100, a set (a group) of search spaces by setting an index related to the one or the plurality of search space sets. Here, in the present embodiment, the name referred as the SSSG is merely an example, and any name may be used as long as the name is a set (a group) of search spaces associated with one or a plurality of search space sets.

In the search space set switching, an operation similar to the PDCCH skipping described above can be performed by not configuring a search space in one SSSG configured in the UE 100 and instructing the switching to the one SSSG using a DCI. In addition, in the other SSSG configured in the UE 100, it is also possible to configure a long search space period and to instruct switching to the one SSSG by DCI. In order to perform such an operation, it is necessary to configure, in the UE 100, a total of three SSSGs including an SSSG having a normal search space period, an SSSG having no search space, and an SSSG having a long search space period. In addition, when the SSSG, the search space period of which is long, is configured in the UE 100, a total of four SSSGs needs to be configured in the UE 100. Such various SSSGs are configured in the UE 100 and switching of the SSSG is instructed by DCI, thereby making it possible to achieve flexible power saving.

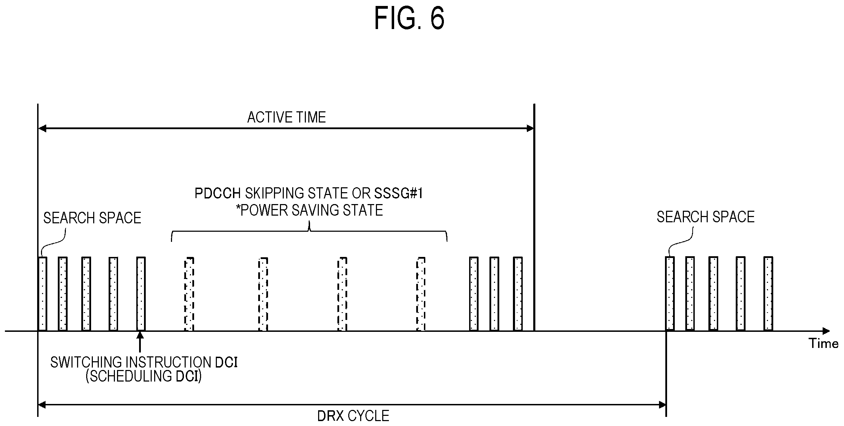

Next, the DRX and the power saving state according to the present embodiment will be described with reference to Fig. 6.

When DRX is configured in the UE 100, the UE 100 monitors a PDCCH discontinuously using a DRX operation. Specifically, the DRX operation is controlled by the following DRX parameters.

· DRX cycle: defines a period during which the UE 100 wakes up.
· On-duration: duration during which the UE 100 waits to receive the PDCCH after the wake up of the UE 100. When the UE 100 successfully decodes the PDCCH, the UE 100 maintains the wake-up state and starts an inactivity-timer.
· Inactivity timer: defines a time section during which the UE 100 waits after the last successful PDCCH decoding and a section during which the UE 100 sleeps again when the PDCCH decoding fails.
· Retransmission timer: defines a time section during which retransmission is expected.

As described above, since the UE 100 in which the DRX is configured does not need to monitor the PDCCH in the sleep state (that is, in a reception-OFF duration), power consumption of the UE 100 can be reduced. On the other hand, the UE 100 waits to receive the PDCCH and monitors the PDCCH in the search space during the active time. The active time is a time during which any one of an on-duration timer (drx-onDurationTimer), an inactivity timer (drx-InactivityTimer), a downlink retransmission timer (drx-RetransmissionTimerDL), and an uplink retransmission timer (drx-RetransmissionTimerUL) is in operation. The downlink retransmission timer (drx-RetransmissionTimerDL) and the uplink retransmission timer (drx-RetransmissionTimerUL) are examples of retransmission related timers for DRX operation in the RRC connected state.

The PDCCH skipping or the search space set switching is performed within the active time of the DRX, thereby making it possible to dynamically switch to the power saving state within the active time. Accordingly, it is possible to obtain a larger effect of power consumption reduction than that of power consumption reduction by DRX.

Here, in a case where a scheduling DCI is used as a switching instruction DCI instructing switching to the power saving state, data is transmitted and received between the base station 200 and the UE 100, and data retransmission processing by HARQ may be required. Therefore, when the UE 100 immediately starts the switching to the power saving state in response to the reception of the scheduling DCI instructing the switching to the power saving state, there is a concern that the HARQ processing cannot be appropriately performed.

In addition, the UE 100 in the RRC connected state performs a sounding reference signal (SRS) transmission to the base station 200, channel state information (CSI) measurement, and the CSI report to the base station 200. Since a duration during which the UE 100 is in the power saving state is considered to be a duration during which data transmission and reception are not temporarily performed, it is desirable to be able to reduce power consumption necessary for the SRS transmission, the CSI measurement, and the CSI report.

### (Configuration of user equipment)

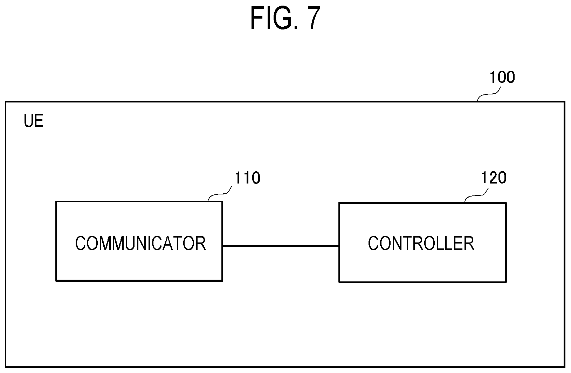

Next, a configuration of the UE 100 according to the present embodiment will be described with reference to Fig. 7. The UE 100 includes a communicator 110 and a controller 120.

The communicator 110 performs radio communication with the base station 200 by transmitting and receiving a radio signal to and from the base station 200. The communicator 110 includes at least one receiver and at least one transmitter. The receiver and the transmitter may include an antenna and an RF circuit. The antenna converts a signal into a radio wave and emits the radio wave into space. Furthermore, the antenna receives a radio wave in space and converts the radio wave into a signal. The RF circuit performs analog processing of a signal transmitted and received via the antenna. The RF circuit may include a high frequency filter, an amplifier, a modulator, a low pass filter, and the like.

The controller 120 performs various types of control in the UE 100. The controller 120 controls communication with the base station 200 via the communicator 110. An operation of the UE 100 described above and described later may be an operation under the control of the controller 120. The controller 120 may include at least one processor capable of executing a program and a memory that stores the program. The processor may execute the program to perform the operation of the controller 120. The controller 120 may include a digital signal processor that performs digital processing of a signal transmitted and received via the antenna and the RF circuit. The digital processing includes processing of the protocol stack of the RAN. The memory stores the program executed by the processor, a parameter related to the program, and data related to the program. The memory may include at least one of a read only memory (ROM), an erasable programmable read only memory (EPROM), an electrically erasable programmable read only memory (EEPROM), a random access memory (RAM), and a flash memory. All or part of the memory may be included in the processor.

In the UE 100 according to the present embodiment, in the first state in which a PDCCH is monitored in a search space, the communicator 110 receives a scheduling DCI indicating a radio resource (specifically, a PDSCH resource and a PUSCH resource) allocated to the UE 100 from the base station 200 on the PDCCH. The controller 120 controls, based on the scheduling DCI, the communicator 110 so as to receive or transmit data using the radio resource. When the communicator 110 receives a scheduling DCI instructing switching to the second state (for example, the power saving state) in which the configuration related to the search space is different from the first state, the controller 120 suspends the start of switching while a retransmission related timer associated with HARQ processing for the data is in operation. As a result, even when the scheduling DCI is used as a switching instruction indicating switching to the power saving state, the HARQ processing can be appropriately performed. Details of such an operation will be described in a first operation example to be described later.

In the UE 100 according to the present embodiment, in the first state in which the PDCCH is monitored in the search space, the controller 120 performs predetermined control to control at least one operation of the SRS transmission to the base station 200, the CSI measurement, and the CSI report to the base station 200. The communicator 110 receives, on the PDCCH from the base station 200, a switching instruction DCI instructing switching to the second state (for example, the power saving state) in which the configuration related to the search space is different from the first state. In response to the reception of the switching instruction DCI, the controller 120 performs control different from the predetermined control on at least one of the SRS transmission, the CSI measurement, and the CSI report. As a result, the control optimized for the power saving state can be applied in the SRS transmission, the CSI measurement, and the CSI report. Therefore, it is possible to further reduce power consumption while reducing power consumption necessary for monitoring of the PDCCH. Details of such an operation will be described in a second operation example to be described later.

It is noted that the first state may be a state in which a first SSSG is applied among a plurality of SSSGs configured in the UE 100 by the base station 200. The second state may be a state in which a second SSSG different from the first SSSG among the plurality of SSSGs is applied. The communicator 110 may receive, as a switching instruction, a scheduling DCI instructing switching from the first SSSG to the second SSSG. Furthermore, the first state may be a state in which a PDCCH provided in a designated period is monitored in a search space. The second state may be a state in which a PDCCH is monitored in search space provided with a period longer than the designated period, or a state in which the monitoring of the PDCCH is skipped. The second state may be realized by the above-described second SSSG.

In the UE 100 according to the present embodiment, the communicator 110 receives, from the base station 200, correspondence relationship information indicating a correspondence relationship between each index of one or a plurality of SSSGs configured in the UE 100 and a value set in an information field in the switching instruction DCI instructing switching of the SSSG applied by the UE 100. The one or the plurality of SSSGs include at least one of the SSSG that periodically monitors the PDCCH and the SSSG that skips monitoring of the PDCCH. In a case where the communicator 110 receives the switching instruction DCI on the PDCCH, the controller 120 controls, based on the correspondence relationship information, the monitoring of the PDCCH by using an SSSG having an index corresponding to the value set in the information field in the received switching instruction DCI. Accordingly, it is possible to realize flexible power saving using various search space sets. In addition, one information field provided in the switching instruction DCI makes it possible to designate any one of the plurality of search space sets, the search space periods of which are different from each other, or to designate a search space set in which the PDCCH is not monitored, and as such, it is possible to suppress an increase in size of a DCI even when various search space sets are used. Details of such an operation will be described in a third operation example to be described later.

In the UE 100 according to the present embodiment, the communicator 110 receives, from the base station 200, a switching instruction DCI instructing switching to one SSSG among three or more SSSGs configured in the UE 100. The controller 120 may start, based on the reception of the switching instruction DCI, a timer that determines duration to which the one SSSG is applied. When the timer expires, the UE 100 (the controller 120) switches to a default SSSG configured by the base station 200 among the three or more SSSGs. Accordingly, it is possible to realize flexible power saving using various search space sets. Specifically, when the UE 100 performs switching of the SSSG on a timer basis, even if three or more SSSGs are configured in the UE 100, the base station 200 can grasp an SSSG serving as a switching destination. Switching can be performed on the timer basis for various SSSGs. Details of such an operation will be described in a fourth operation example to be described later.

### (Configuration of base station)

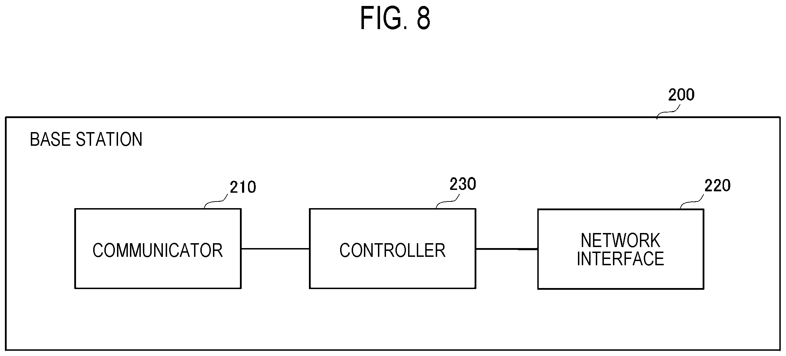

Next, a configuration of the base station 200 according to the present embodiment will be described with reference to Fig. 8. The base station 200 includes a communicator 210, a network interface 220, and a controller 230.

For example, the communicator 210 receives a radio signal from the UE 100 and transmits a radio signal to the UE 100. The communicator 210 may include one or a plurality of receivers that receive radio signals and one or a plurality of transmitters that transmit radio signals.

The network interface 220 transmits and receives a signal to and from a network. The network interface 220 receives, for example, a signal from a neighboring base station connected via an Xn interface, which is an interface between base stations, and transmits the signal to the neighboring base station. In addition, the network interface 220 receives, for example, a signal from the core network apparatus 300 connected via the NG interface, and transmits the signal to the core network apparatus 300.

The controller 230 performs various types of control in the base station 200. The controller 230 controls, for example, communication with the UE 100 via the communicator 210. Furthermore, the controller 230 controls, for example, communication with a node (for example, the neighboring base station and the core network apparatus 300) via the network interface 220. The operation of the base station 200 described above and described later may be an operation under the control of the controller 230. The controller 230 may include at least one processor capable of executing a program and a memory that stores the program. The processor may execute the program to perform the operation of the controller 230. The controller 230 may include a digital signal processor that performs digital processing of a signal transmitted and received via an antenna and an RF circuit. The digital processing includes processing of the protocol stack of the RAN. The memory stores the program executed by the processor, a parameter related to the program, and data related to the program. All or part of the memory may be included in the processor.

The base station 200 according to the present embodiment performs radio communication with the UE 100 that monitors a PDCCH in a search space. The communicator 210 transmits, to the UE 100, correspondence relationship information indicating a correspondence relationship between each index of one or a plurality of SSSGs configured in the UE 100 and a value set in an information field in the switching instruction DCI instructing switching of the SSSG to be applied in the UE 100. The one or the plurality of SSSGs include at least one of the SSSG that periodically monitors the PDCCH and the SSSG that skips monitoring of the PDCCH.

In the base station 200 according to the present embodiment, the communicator 210 transmits, to the UE 100, a switching instruction DCI instructing switching to one SSSG among three or more SSSGs configured in the UE 100. The controller 230 may configure, in the UE 100, a default SSSG serving as a switching destination when a timer that determines duration to which the one SSSG is applied expires.

### (First operation example)

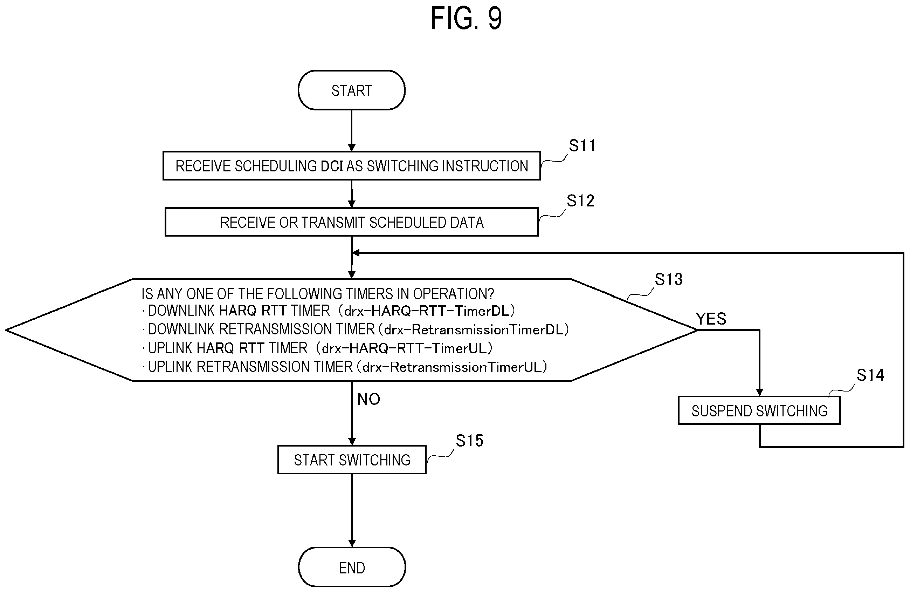

Next, a first operation example according to the present embodiment will be described with reference to Fig. 9.

As described above, in a case where a scheduling DCI is used as a switching instruction DCI, HARQ processing, which is data retransmission processing by HARQ, may be required. Therefore, when the UE 100 immediately starts switching to the power saving state, there is a concern that the HARQ processing cannot be appropriately performed. Therefore, the UE 100 (the controller 120) suspends the start of the switching instructed by the switching instruction DCI while a retransmission related timer associated with the HARQ processing for data scheduled by the switching instruction DCI (the scheduling DCI) is in operation.

As illustrated in Fig. 9, in step S11, the UE 100 (the communicator 110) receives a scheduling DCI as a switching instruction DCI from the base station 200 on a PDCCH. The scheduling DCI may include an information field indicating an SSSG serving as a switching destination in addition to an information field indicating a PDSCH resource or a PUSCH resource allocated to the UE 100.

In step S12, the UE 100 (the communicator 110) receives or transmits data scheduled by the scheduling DCI. For example, the UE 100 (the communicator 110) receives downlink data using the allocated PDSCH resource and transmits uplink data using the allocated PUSCH resource. When the UE 100 (the communicator 110) receives the downlink data, the UE 100 (the controller 120) attempts data decoding of the received downlink data, and feeds back, to the base station 200, an HARQ feedback indicating whether the data decoding is successful, that is, ACK or NACK. When the UE 100 (the communicator 110) transmits the uplink data, the UE 100 (the controller 120) receives, from the base station 200, an HARQ feedback indicating whether the base station 200 succeeds in data decoding of the uplink data, that is, ACK or NACK. The UE 100 (the controller 120) manages the HARQ processing with a timer for each data to be received or transmitted, and continues the HARQ processing until the data decoding of the data is completed.

In step S13, the UE 100 (the controller 120) determines whether any one of the next retransmission related timers used for the HARQ processing is in operation.

### · Downlink HARQ RTT Timer (drx-HARQ-RTT (Round Trip Time)-TimerDL)

The downlink HARQ RTT Timer is a timer used for the HARQ processing of the downlink data, and a timer defining a minimum duration until downlink allocation for HARQ retransmission expected by a MAC entity of the UE 100 is performed. The UE 100 (the controller 120) starts the downlink HARQ RTT timer in response to the transmission of the HARQ feedback for the downlink data. The UE 100 (the controller 120) does not need to monitor the PDCCH during the operation of the downlink HARQ RTT timer.

### · Downlink retransmission timer (drx-RetransmissionTimerDL)

The downlink retransmission timer is a timer used for the HARQ processing of the downlink data, and a timer defining a maximum duration until downlink retransmission is received. When downlink data decoding is not successful at the expiration of the downlink HARQ RTT timer, the UE 100 (the controller 120) starts the downlink retransmission timer. The UE 100 (the controller 120) monitors the PDCCH and waits for retransmission data during the operation of the downlink retransmission timer.

### · Uplink HARQ RTT Timer (drx-HARQ-RTT-TimerUL)

The uplink HARQ RTT Timer is a timer used for the HARQ processing of the uplink data, and a timer defining a minimum duration until a MAC entity of the UE 100 receives a HARQ retransmission permission (HARQ retransmission grant). The UE 100 (the controller 120) starts the downlink retransmission timer in response to the transmission of the uplink data. The UE 100 (the controller 120) does not need to monitor the PDCCH during the operation of the uplink HARQ RTT timer.

### · Uplink retransmission timer (drx-RetransmissionTimerUL)

The uplink retransmission timer is a timer used for the HARQ processing of the uplink data, and a timer defining a maximum duration until uplink retransmission permission is received. The UE 100 (the controller 120) starts the uplink retransmission timer when the uplink HARQ RTT timer expires. The UE 100 (the controller 120) monitors the PDCCH during the operation of the uplink retransmission timer.

When any one of these retransmission related timers is in operation (step S13: YES), in step S14, the UE 100 (the controller 120) suspends the start of switching instructed by the switching instruction DCI received in step S11.

On the other hand, when none of the retransmission related timers is in operation (step S13: NO), in step S15, the UE 100 (the controller 120) starts or executes the switching instructed by the switching instruction DCI received in step S11. For example, the UE 100 (the controller 120) may perform the SSSG switching from the first slot after the retransmission related timer expires.

As described above, in the first operation example, the duration during which the retransmission related timer is in operation forms at least a part of the switching delay time (switch delay) of switching instructed by the switching instruction DCI. When the switching delay time is set by the higher layer signaling (the RRC message), the UE 100 (the controller 120) may suspend the start of the switching instructed by the switching instruction DCI in the duration during which the retransmission related timer is in operation even when the switching delay time set by the higher layer signaling has elapsed.

In addition, the switching delay time may include a duration during which the retransmission related timer is in operation as follows.

- A duration during which drx-HARQ-RTT-TimerDL is in operation, in which the drx-HARQ-RTT-TimerDL is started for the corresponding HARQ processing in the first symbol after the transmission of the DL HARQ feedback is finished:
   · A duration during which drx-RetransmissionTimerDL is in operation, in which the drx-RetransmissionTimerDL is started when the corresponding HARQ processing of the first symbol after the expiration of the drx-HARQ-RTT-TimerDL is not successfully decoded:
      · A duration during which drx-HARQ-RTT-TimerUL is in operation, in which the drx-HARQ-RTT-TimerUL is started for the corresponding HARQ processing in the first symbol after the first transmission (in bundle) of the corresponding PUSCH transmission is finished:
         · A duration during which drx-RetransmissionTimerUL is in operation, in which the drx-RetransmissionTimerUL is started for the corresponding HARQ processing in the first symbol after the expiration of the drx-HARQ-RTT-TimerUL.

Furthermore, in a case where the UE 100 (the controller 120) executes a plurality of types of HARQ processing, when at least one retransmission related timer of the plurality of types of HARQ processing is in operation, the start of the switching instructed by the switching instruction DCI may be suspended. For example, the UE 100 may perform SSSG switching (for example, from the first slot after expiration) based on the conditions that the drx-RetransmissionTimerDLs corresponding to all types of HARQ processing have expired and/or the drx-RetransmissionTimerULs corresponding to all types of HARQ processing have expired.

It is noted that the UE 100 (the controller 120) may perform the above-described operation upon receiving a configured DL assignment (that is, a downlink DCI format with CRC scrambled by CS-RNTI) and/or a configured UL grant (that is, an uplink DCI format with CRC scrambled by CS-RNTI).

In the first operation example, various existing timers for DRX are used, but the present invention is not limited thereto, and a timer used for the HARQ processing and the retransmission processing of the PDCCH skipping and/or the SSSG switching set in the higher layer may be used. Such a timer is, for example, a DCIbasedPowerSaving-HARQ-RTT-TimerDL, a DCIbasedPowerSaving-HARQ-RTT-TimerUL, a DCIbasedPowerSaving-RetransmissionTimerDL, a DCIbasedPowerSaving-RetransmissionTimerUL, or the like. Here, the DCIbased PowerSaving-HARQ-RTT-TimerDL is an example of the downlink HARQ RTT timer. The DCIbasedPowerSaving-HARQ-RTT-TimerUL is an example of the uplink HARQ RTT timer. The DCIbasedPowerSaving-RetransmissionTimerDL is an example of the downlink retransmission timer. The DCIbasedPowerSaving-RetransmissionTimerUL is an example of the uplink retransmission timer.

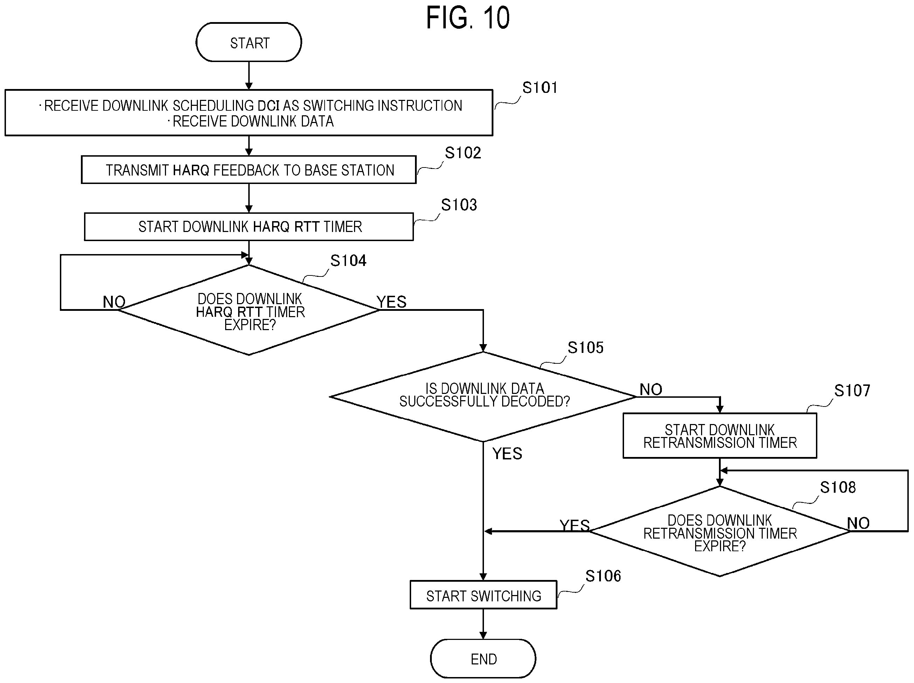

Next, the first operation example according to the present embodiment will be described focusing on a downlink with reference to Fig. 10.

In step S101, the UE 100 (the communicator 110) receives a downlink scheduling DCI on a PDCCH as a switching instruction DCI. The downlink scheduling DCI is a DCI for allocating a radio resource (that is, a PDSCH resource) for downlink data. The UE 100 (the communicator 110) receives the downlink data from the base station 200 using the PDSCH resource allocated by the downlink scheduling DCI. The UE 100 (the controller 120) attempts to decode the received downlink data.

In step S102, the UE 100 (the communicator 110) transmits, to the base station 200, an HARQ feedback indicating whether the downlink data received in step S102 is successfully decoded.

In step S103, the UE 100 (the controller 120) starts a downlink HARQ RTT timer in response to the transmission of the HARQ feedback corresponding to the downlink data. The UE 100 (the controller 120) suspends the start of switching instructed by the switching instruction DCI when the downlink HARQ RTT timer is in operation.

When the downlink HARQ RTT timer expires (step S104: YES), in step S105, the UE 100 (the controller 120) determines whether the downlink data is successfully decoded. When the downlink data is successfully decoded (step S105: YES), in step S106, the UE 100 (the controller 120) starts the switching instructed by the switching instruction DCI.

On the other hand, when the downlink data is not successfully decoded (step S105: NO), in step S107, the UE 100 (the controller 120) starts a downlink retransmission timer in response to the expiration of the downlink HARQ RTT timer. The UE 100 (the controller 120) monitors the PDCCH and suspends the start of the switching instructed by the switching instruction DCI while the downlink retransmission timer is in operation.

When the downlink retransmission timer expires (step S108: YES), the UE 100 (the controller 120) starts the switching instructed by the switching instruction DCI in step S106. When retransmission data is received from the base station 200 during the operation of the downlink retransmission timer, the UE 100 (the controller 120) may stop the downlink retransmission timer and return to the processing in step S102.

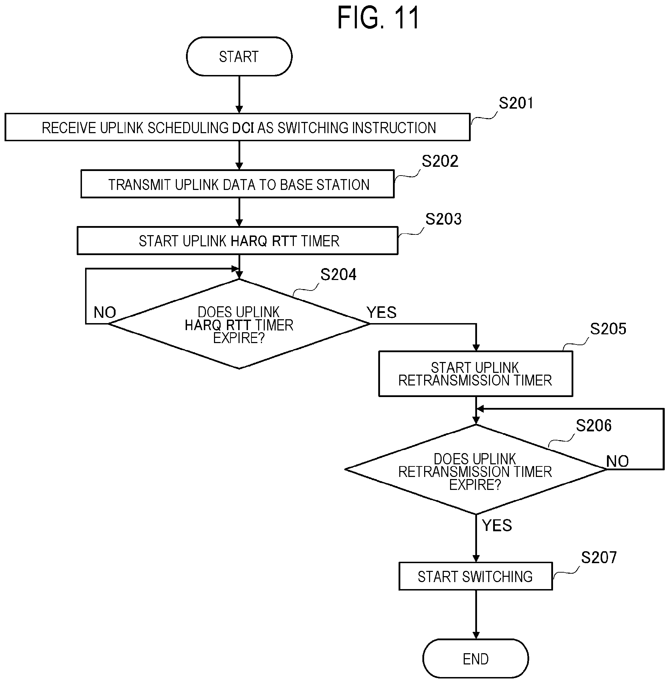

Next, the first operation example according to the present embodiment will be described focusing on an uplink with reference to Fig. 11.

In step S201, the UE 100 (the communicator 110) receives an uplink scheduling DCI on a PDCCH as a switching instruction DCI. The uplink scheduling DCI is a DCI for allocating a radio resource (that is, a PUSCH resource) for uplink data.

In step S202, the UE 100 (the communicator 110) transmits the uplink data to the base station 200 using the PUSCH resource allocated by the uplink scheduling DCI.

In step S203, the UE 100 (the controller 120) starts an uplink HARQ RTT timer in response to the transmission of the uplink data. The UE 100 (the controller 120) suspends the start of switching instructed by the switching instruction DCI while the uplink HARQ RTT timer is in operation.

When the uplink HARQ RTT timer expires (step S204: YES), the UE 100 (the controller 120) starts an uplink retransmission timer in step S205. The UE 100 (the controller 120) monitors the PDCCH and suspends the start of the switching instructed by the switching instruction DCI while the uplink retransmission timer is in operation.

When the uplink retransmission timer expires (step S206: YES), in step S207, the UE 100 (the controller 120) starts the switching instructed by the switching instruction DCI.

As described above, according to the first operation example of the present embodiment, the UE 100 receiving a scheduling DCI as a switching instruction suspends the start of switching while a retransmission related timer associated with HARQ processing for data scheduled by the scheduling DCI is in operation. As a result, even when the scheduling DCI is used as the switching instruction, the HARQ processing can be appropriately performed.

In the first operation example, the CSI report to the base station 200 may be considered. For example, when the UE 100 that has received a switching instruction DCI is instructed to perform aperiodic CSI report to the base station 200 by the scheduling DCI, the UE 100 (the controller 120) may transmit the CSI report to the base station 200 in the scheduled PUSCH and suspend the start of the switching instructed by the switching instruction DCI until the CSI report is performed. Then, the UE 100 (the controller 120) may start the switching instructed by the switching instruction DCI in response to the transmission of the CSI report in the scheduled PUSCH. Details of the CSI report will be described in the second operation example to be described later.

### (Second operation example)

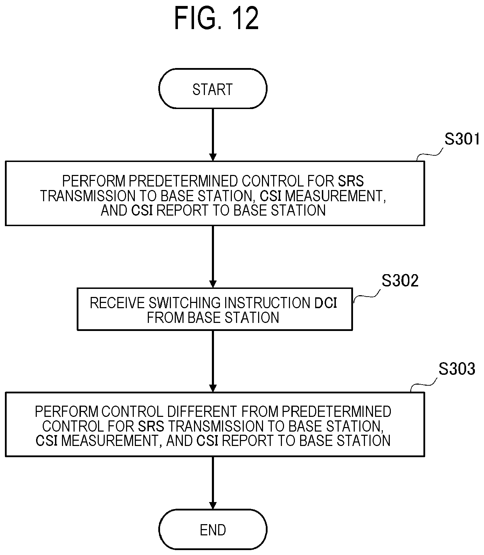

Next, the second operation example according to the present embodiment will be described with reference to Fig. 12.

As described above, since a duration during which the UE 100 is in the power saving state is considered to be a duration during which transmission of data and reception thereof are not temporarily performed, it is desirable to reduce power consumption necessary for SRS transmission, CSI measurement, and CSI report.

Here, the SRS transmission refers to an operation in which the base station 200 transmits an SRS, which is an uplink physical signal for channel estimation used for estimating an uplink channel state, to the base station 200, and the UE 100 performs the SRS transmission according to the configuration from the base station 200. SRS report is an operation for link adaptation of an uplink. The link adaptation adapts, to a channel state, a modulation and coding scheme (MCS) applied to data transmission. In a duration during which the UE 100 is in the power saving state, since it is less necessary to perform the link adaptation of the uplink, the SRS transmission is suppressed.

The CSI measurement refers to an operation of measuring a reference signal used for estimating a downlink channel state, and the UE 100 performs the CSI measurement according to the configuration from the base station 200. For example, the UE 100 performs the CSI measurement based on at least one of a channel state information reference signal (CSI-RS) and a synchronization signal/physical broadcast channel (SS/PBCH) block transmitted by the base station 200. CSI report refers to an operation of transmitting, to the base station 200, the CSI report indicating a channel state estimated according to the result of the CSI measurement, and the UE 100 performs the CSI report according to the configuration from the base station 200. For example, the channel state includes one or a plurality of a channel quality indicator (CQI), a rank indicator (RI), a precoding matrix indicator (PMI), an SS/PBCH block resource indicator (SSBRI), a CSI-RS resource indicator (CRI), a layer indicator (LI), and a layer 1 reference signal received power (L1-RSRP). The CSI report may be performed on the PUCCH or the PUSCH. The CSI measurement and the CSI report are operations for link adaptation of a downlink. In a duration during which the UE 100 is in the power saving state, since it is less necessary to perform the link adaptation of the downlink, the CSI measurement and the CSI report are suppressed.

As illustrated in Fig. 12, in step S301, in the first state in which the PDCCH is monitored in the search space, the UE 100 (the controller 120) performs predetermined control to control at least one operation of the SRS transmission to the base station 200, the CSI measurement, and the CSI report to the base station 200. In the first state, the UE 100 (the controller 120) may periodically perform at least one operation out of the SRS transmission, the CSI measurement, and the CSI report. For example, the UE 100 (the controller 120) performs at least one operation out of the periodic SRS transmission and the periodic CSI report in the first state. The periodic SRS transmission may include semi-persistent SRS transmission. The periodic CSI report may include semi-persistent CSI report performed on the PUCCH or the PUSCH.

In step S302, the UE 100 (the communicator 110) receives, on the PDCCH, a switching instruction DCI instructing switching to the second state (for example, the power saving state) in which the configuration related to the search space is different from the first state. In the second operation example, the switching instruction DCI is not limited to the scheduling DCI as described above, and may be a non-scheduling DCI. The switching instruction DCI may include an information field indicating an SSSG serving as a switching destination.

In step S303, in response to the reception of the switching instruction DCI, the UE 100 (the controller 120) performs control different from predetermined control on at least one operation out of the SRS transmission, the CSI measurement, and the CSI report.

For example, the UE 100 (the controller 120) stops the at least one operation out of the SRS transmission, the CSI measurement, and the CSI report within a switching delay time (switch delay) from the first state to the second state. The UE 100 (the controller 120) may stop the periodic SRS transmission and the periodic CSI report within the switching delay time. The above-described control may be expressed as "within the switching delay time configured by a P_{switch} symbol, the UE is not expected to perform the following operations:
· Periodic SRS transmission and semi-persistent SRS transmission
· Semi-persistent CSI configured for PUSCH
· Periodic CSI report, which is L1-RSRP performed on PUCCH, when ps-TransmitPeriodicL1-RSRP is not configured with a value "true"
· Periodic CSI report that is not L1-RSRP performed on PUCCH when ps-TransmitOtherPeriodicCSI is not configured with the value "true".

In the second operation example, the first state may be a state in which a PDCCH provided in a designated period is monitored in a search space, and the second state may be a state in which the monitoring of the PDCCH is skipped (a PDCCH skipping state) (refer to Fig. 4). The UE 100 (the controller 120) may not perform at least one operation out of the SRS transmission, the CSI measurement, and the CSI report in the second state.

In the second operation example, the first state may be a state in which a PDCCH provided in a designated period is monitored in a search space, and the second state may be a state in which the PDCCH is monitored in the search space provided in a period longer than the designated period (refer to Fig. 5). Switching from the first state to the second state may be realized by SSSG switching. In the second state, the UE 100 (the controller 120) may perform at least one operation out of the SRS transmission, the CSI measurement, and the CSI report only in a time section of the search space.

For example, the UE 100 (the controller 120) may perform aperiodic SRS transmission only in a monitoring slot, which is a time section of the search space in the second state. Such control may be expressed as "when a period of the search space is longer than a predetermined value (for example, 80 milliseconds), the UE in which the SSSG switching is configured by higher layer signaling does not expect that an SRS resource is available in other than the corresponding monitoring slot in order to trigger the aperiodic SRS transmission".

In addition, the UE 100 (the controller 120) may perform the CSI measurement only in the monitoring slot, which is the time section of the search space in the second state. Such control may be expressed as "in the UE in which the SSSG switching is configured by higher layer signaling, the latest CSI measurement occasion for the CSI report excludes a slot other than the monitoring slot corresponding to the search space". Such control may be expressed as "in the UE in which the SSSG switching is configured by higher layer signaling does not expect that a CSI-RS resource is available outside the corresponding monitoring slot when the period of the search space is longer than a predetermined value (for example, 80 milliseconds)".

As described above, according to the second operation example of the present embodiment, in response to the reception of a switching instruction DCI, the UE 100 receiving the switching instruction DCI performs control different from control performed before the switching instruction DCI is received for at least one of the SRS transmission, the CSI measurement, and the CSI report. As a result, in the SRS transmission, the CSI measurement, and the CSI report, control optimized for the power saving state, for example, control optimized for an extended search space period can be applied, thereby making it possible to further reduce power consumption while reducing power consumption necessary for monitoring of the PDCCH.

### (Third operation example)

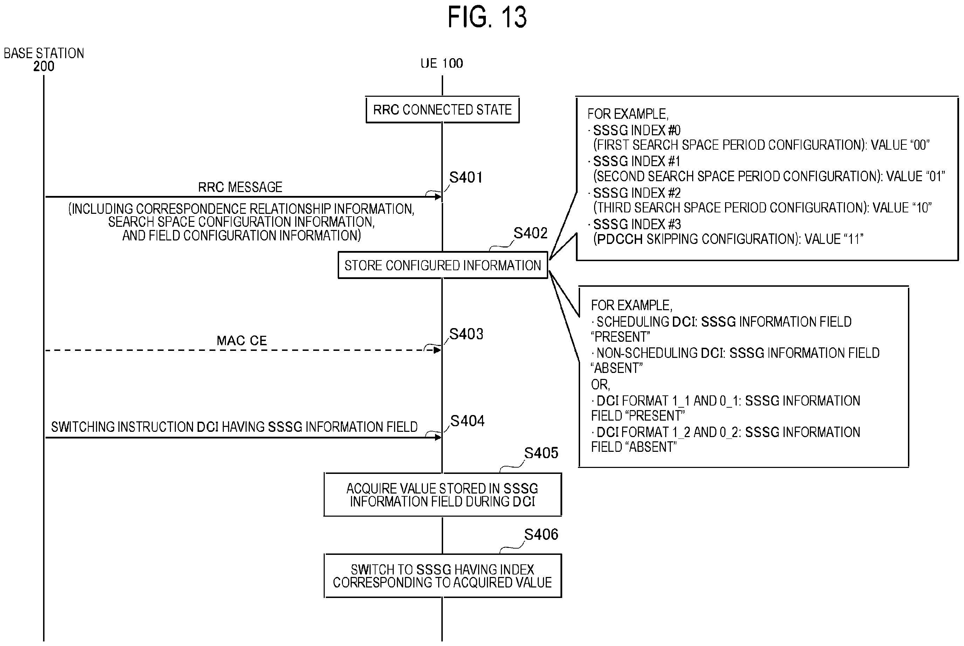

Next, a third operation example according to the present embodiment will be described with reference to Fig. 13.

In the third operation example, an operation of performing power saving by SSSG switching is assumed. Specifically, one or a plurality of SSSGs can be configured in the UE 100 from among various SSSGs including a plurality of SSSGs having different search space periods and an SSSG having no search space, and flexible power saving is achieved by instructing switching of the SSSG by DCI.

As illustrated in Fig. 13, in step S401, the base station 200 (the communicator 210) transmits one or a plurality of RRC messages to the UE 100. The one or the plurality of RRC messages may include a dedicated RRC message (for example, an RRCReconfiguration message) that is transmitted to the UE individually. The UE 100 (the communicator 110) receives the RRC message.

The RRC message includes correspondence relationship information indicating a correspondence relationship between an index of each of one or the plurality of SSSGs configured in the UE 100 and a value set in an information field (hereinafter referred to as an "SSSG information field") in a switching instruction DCI instructing switching of the SSSG applied by the UE 100. The one or the plurality of SSSGs include at least one of the SSSG that periodically monitors the PDCCH and the SSSG that skips monitoring of the PDCCH.

For example, when four SSSGs are configured in the UE 100, the correspondence relationship information includes information such as "an SSSG index #0: value "00"", "an SSSG index #1: value "01"", "an SSSG index #2: value "10"", and "an SSSG index #3: value "11"". The base station 200 is not limited to collectively configuring these four SSSGs in the UE 100, and may configure the four SSSGs in the UE 100, for example, by dividing the four SSSGs twice to obtain two SSSGs each. It is noted that the value set in the SSSG information field may be configured in a bitmap format. For example, a position (a code point) of a bit, which is "1", may be associated with an SSSG index, such as "an SSSG index #0: value "1000"", "an SSSG index #1: value "0100"", "an SSSG index #2: value "0010"", and "an SSSG index #3: value "0001"".

The RRC message further includes search space configuration information associated with each of the SSSG indexes. The search space configuration information includes one or a plurality of search space configurations. Each search space configuration includes a search space period, a search space offset, a search space duration (for example, the number of consecutive slots), a symbol for PDCCH monitoring, an aggregation level, a type of search space, a DCI format, and the like.

For example, search space configuration information associated with the SSSG index #0 is information for configuring a first search space period as a search space period. Search space configuration information associated with the SSSG index #1 is information for configuring a second search space period as a search space period. Search space configuration information associated with the SSSG index #2 is information for configuring a third search space period as a search space period. Search space configuration information associated with an SSSG index #4 is information indicating that no search space is configured. That is, the SSSG index #4 is associated with search space configuration information indicating PDCCH skipping.

The RRC message may include field configuration information indicating the presence or absence of an SSSG information field for each of one or a plurality of DCI formats. The switching instruction DCI is an DCI having a DCI format in which the presence of the SSSG information field is indicated by the field configuration information. The presence/absence of the SSSG information field may be configured for the non-scheduling DCI and/or the scheduling DCI in common or independently. The presence/absence of the SSSG information field may be configured in common for the DCI format 1_1 and the DCI format 0_1 and in common for the DCI format 1_2 and the DCI format 0_2.

The RRC message may include number-of-bits configuration information indicating the number of bits of the SSSG information field for each one or a plurality of DCI formats. For the non-scheduling DCI and/or the scheduling DCI, the number of bits of the SSSG information field may be directly configured in common or independently. The number of bits of the SSSG information field may be configured in common for the DCI format 1_1 and the DCI format 0_1 and/or in common for the DCI format 1_2 and the DCI format 0_2. For example, the SSSG information field of up to two bits may be configured for the DCI format 1_1 and/or the DCI format 0_1 and/or one-bit SSSG information field may be configured for the DCI format 1_2 and the DCI format 0_2.

The RRC message may include a timer setting value of a switching timer for each one or a plurality of SSSGs. Details of such a switching timer will be described in a fourth operation example to be described later.

In step S402, the UE 100 (the controller 120) stores the information configured from the base station 200.

In step S403, the base station 200 (the communicator 210) may transmit, to the UE 100, MAC CE (hereinafter referred to as "SSSG state selection MAC CE") that designates activation or deactivation of the SSSG for each SSSG index. The UE 100 (the communicator 110) receives the SSSG state selection MAC CE. The SSSG state selection MAC CE indicates activation/deactivation for each SSSG index. An activated SSSG enters a valid state as an SSSG serving as a switching destination, and a deactivated SSSG enters an invalid state as an SSSG serving as a switching destination. However, deactivation may be prohibited for a default SSSG. The default SSSG will be described in the fourth operation example to be described later.

For example, the SSSG state selection MAC CE is identified by a MAC subheader with an LCID defined for the SSSG state selection MAC CE. The SSSG state selection MAC CE may include a "cell ID field" indicating a serving cell to which the SSSG state selection MAC CE is applied. The SSSG state selection MAC CE may include a "Ti field" indicating activation/deactivation for each entry "i" of an SSSG index list consisting of SSSG indexes. The "Ti field" includes a "T0 field" to a "T(n-1) field", and a value "1" is set for the SSSG to be enabled. Here, "n" indicates the maximum number of SSSGs that can be activated, for example, "4". Assuming that the SSSG index #0 is activated, the SSSG index #1 is deactivated, the SSSG index #2 is activated, and the SSSG index #3 is deactivated, the "T0 field" is set to "1", the "T1 field" is set to "0", the "T2 field" is set to "1", and the "T3 field" is set to "1".

The SSSG information field may be configured in a bitmap form only for the activated SSSG. For example, the first enabled SSSG is mapped to a code point 1 of the SSSG information field, and the second enabled SSSG is mapped to a code point 2 of the SSSG information field. Assuming a case of activating the SSSG index #0, deactivating the SSSG index #1, activating the SSSG index #2, and deactivating the SSSG index #3, the number of bits of the SSSG information field is "2", where "10" indicates the SSSG index #0, and "01" indicates the SSSG index #2.

In step S404, the base station 200 (the communicator 210) transmits a switching instruction DCI having the SSSG information field to the UE 100 on the PDCCH. The UE 100 (the communicator 110) receives the switching instruction DCI on the PDCCH. The UE 100 (the controller 120) may determine whether the DCI format of the detected DCI corresponds to the switching instruction DCI based on the field configuration information configured from the base station 200.

In step S405, the UE 100 (the controller 120) obtains a value set in the SSSG information field of the switching instruction DCI received in step S404. The UE 100 (the controller 120) may obtain the value set in the SSSG information field after determining the number of bits of the SSSG information field based on the number-of-bits configuration information configured from the base station 200. Alternatively, the UE 100 (the controller 120) may determine the number of bits of the SSSG information field based on the number of SSSG indexes (that is, the number of entries of the configured SSSG index list) configured in the UE 100 and then obtain the value set in the SSSG information field. For example, when the number of SSSG indexes configured in the UE 100 is "I", the UE 100 (the controller 120) may calculate and determine the number of bits of the SSSG information field using an integer value obtained by rounding up a decimal point of log₂ (I).

In step S406, the UE 100 (the controller 120) performs switching to the SSSG having the SSSG index corresponding to the value set in the SSSG information field in the received switching instruction DCI based on the correspondence relationship information configured from the base station 200, and monitors the PDCCH according to the SSSG serving as the switching destination. For example, in the example of Fig. 13, when the value set in the SSSG information field is "11", the UE 100 (the controller 120) determines that the switching to the SSSG having the SSSG index #3 is instructed, and performs the switching to the SSSG having the SSSG index #3.

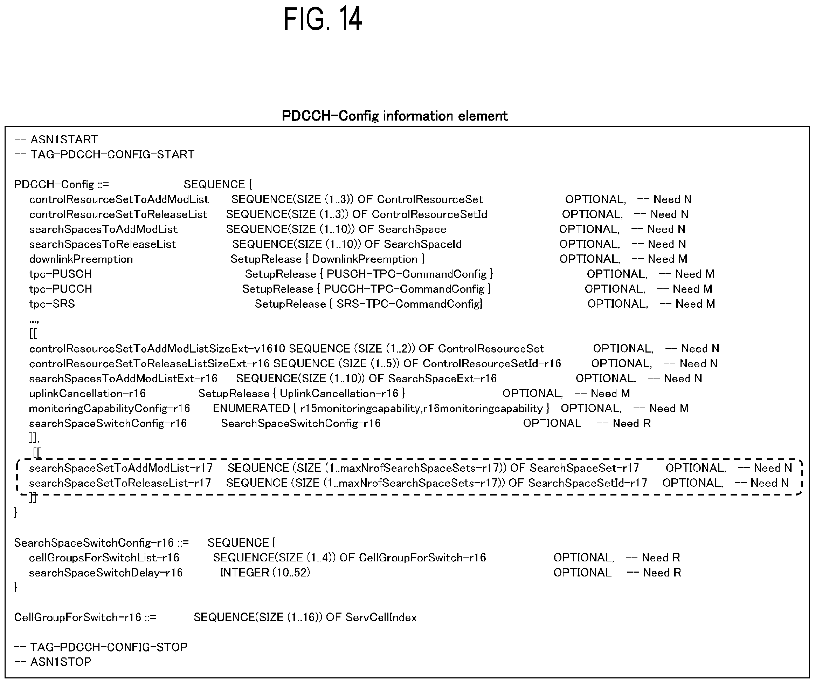

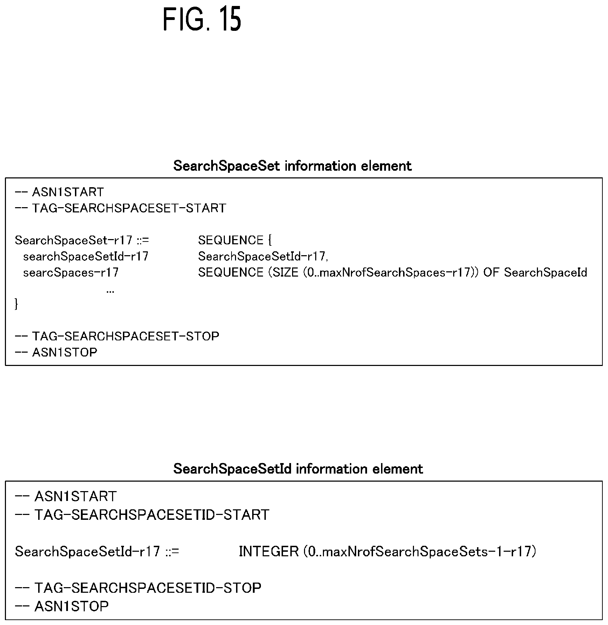

Next, a first configuration example of an information element included in an RRC message in the third operation example will be described with reference to Figs. 14 and 15.

As illustrated in Fig. 14, the RRC message includes a PDCCH configuration (PDCCH-Config) information element. This information element is an information element used to configure a UE-specific PDCCH parameter such as a control resource set (CORESET), a search space, and an additional parameter for acquiring a PDCCH.

The PDCCH configuration (PDCCH-Config) information element can include an SSSG addition/modification list (searchSpaceSetToAddModList) and/or an SSSG release list (search Space SetToReleaseLi st). The SSSG addition/modification list is a list of SSSGs configured in the UE 100 (SEQUENCE (SIZE (1..maxNrofSearchSpaceSets-r17)) OF SearchSpaceSet-r17). The SSSG release list is a list of SSSGs to be unconfigured in the UE 100 (SEQUENCE (SIZE (1..maxNrofSearchSpaceSets-r17)) OF SearchSpaceSet-r17). Here, "maxNrofSearchSpaceSets-r17" indicates the maximum number of SSSGs that can be configured.

As illustrated in Fig. 15, the "SearchSpaceSet-r17" forming each entry of the SSSG addition/modification list and the SSSG release list includes "SearchSpaceSetId-r17", which is an index of the SSSG, and "searcSpace-r17", which is each search space configuration included in the SSSG. The "searcSpaces-r17" is configured by a list of search space IDs of respective search space configurations included in this SSSG (SEQUENCE (SIZE (0..maxNrofSearchSpaces-r17)) OF SearchspaceId). "SearchSpaceSetId-r17", which is an index of the SSSG, has the number of bits of "0..maxNrofSearchSpaceSets-1-r17".

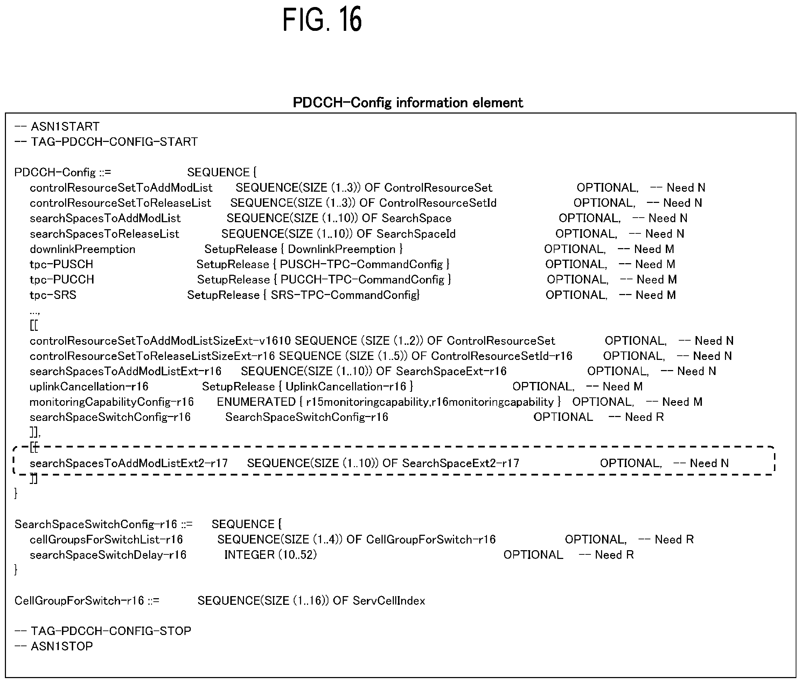

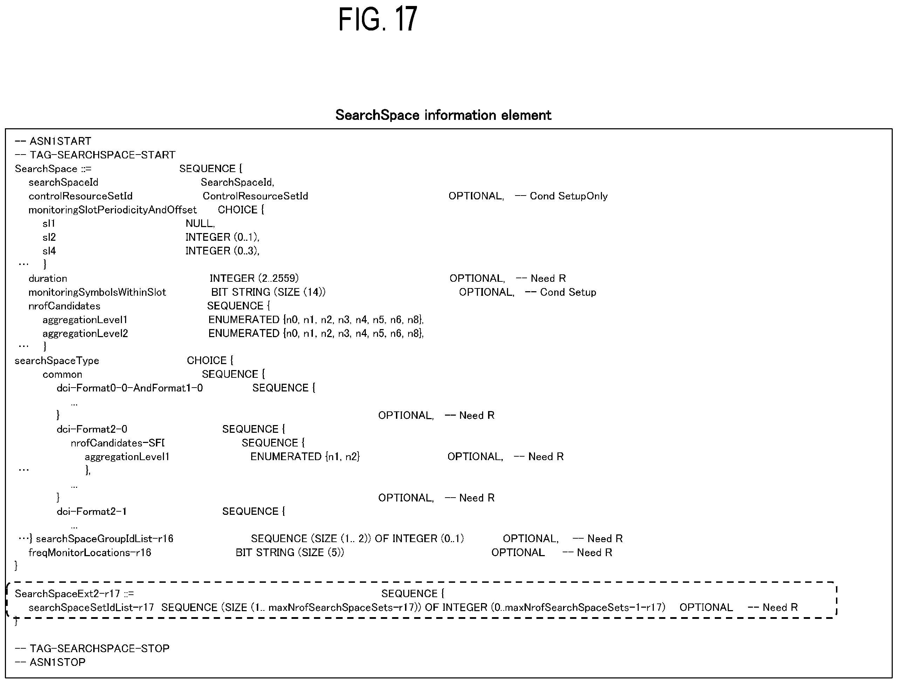

Next, a second configuration example of the information element included in the RRC message in the third operation example will be described with reference to Figs. 16 and 17. The second configuration example indicates, in each search space configuration, an SSSG to which a search space configuration belongs.

As illustrated in Fig. 16, a PDCCH configuration (PDCCH-Config) information element can include a search space addition/modification list (searchSpacesToAddModListExt2-r17). The search space addition/modification list is a list including "SearchSpaceExt2-r17" of 1 to 10.

As illustrated in Fig. 17, the search space configuration (SearchSpace) information element includes "searchSpaceSetIdList-r17", which is a list of indexes of the SSSG with which the search space configuration is associated. One search space configuration can be associated with a plurality of SSSGs. Regarding an SSSG that is not associated with any of the search space configurations configured in the UE 100, the UE 100 does not monitor the PDCCH while using the SSSG.

As described above, according to the third operation example, correspondence relationship information is received from the base station 200, in which the correspondence relationship information indicates a correspondence relationship between an SSSG index of each of one or a plurality of SSSGs configured in the UE 100 and a value set in an SSSG information field in a switching instruction DCI instructing the switching of the SSSG applied by the UE 100. The one or the plurality of SSSGs include at least one of the SSSG that periodically monitors the PDCCH and the SSSG that skips monitoring of the PDCCH. Accordingly, it is possible to achieve flexible power saving using various SSSGs. In addition, one SSSG information field provided in the switching instruction DCI can designate any one of the plurality of SSSGs having different search space periods or designate an SSSG that does not monitor the PDCCH, thereby making it possible to suppress an increase in size of the DCI even when various SSSGs are used.

### (Fourth operation example)

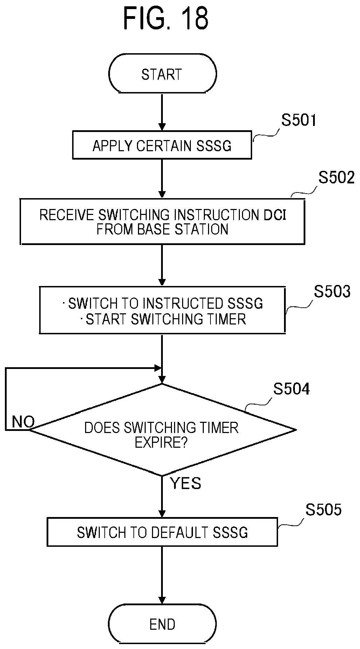

Next, a fourth operation example according to the present embodiment will be described with reference to Fig. 18. In the fourth operation example, a case is assumed in which the UE 100 performs switching of an SSSG on a timer basis and three or more SSSGs can be configured in the UE 100.

In the fourth operation example, the base station 200 (the controller 230) may configure, in the UE 100, one of the SSSGs configured in the UE 100 as a default SSSG. For example, the base station 200 (the controller 230) may designate one of the SSSG indexes to be configured in the UE 100 as a "defaultSSSG-Id". The default SSSG may be an SSSG determined by a predetermined rule shared in advance by the base station 200 and the UE 100 among the SSSGs configured in the UE 100. The default SSSG may be an SSSG configured, by the base station 200, in the UE 100 as the default SSSG.

As illustrated in Fig. 18, in step S501, the UE 100 (the controller 120) having a plurality of SSSGs configured therein by the base station 200 monitors a PDCCH using one SSSG among the plurality of SSSGs.

In step S502, the UE 100 (the communicator 110) receives, from the base station 200, a switching instruction DCI instructing switching to another SSSG on the PDCCH.

In step S503, the UE 100 (the controller 120) performs the switching to an SSSG designated by the switching instruction DCI and starts a timer (a switching timer) associated with the SSSG.

In step S504, the UE 100 (the controller 120) determines whether the switching timer expires.

When the switching timer expires (step S504: YES), in step S505, the UE 100 (the controller 120) switches to a default SSSG among the plurality of configured SSSGs. Here, by switching to the SSSG designated as the "defaultSSSG-Id" from the base station 200, the base station 200 can grasp the SSSG serving as the switching destination of the UE 100. Since the switching timer is a value set by the base station 200, the base station 200 manages the switching timer similarly to the UE 100, and can grasp that the switching timer has expired in the UE 100.

The UE 100 (the controller 120) determines the default SSSG according to a predetermined rule when the default SSSG is not configured by the base station 200, more specifically, when the default SSSG is not explicitly designated by the base station 200 as the "defaultSSSG-Id". The predetermined rule is, for example, a rule defined in the technical specification of 3GPP, and is a rule shared in advance by the base station 200 and the UE 100.

Here, the predetermined rule may be a rule that determines, as a default SSSG, an SSSG corresponding to an SSSG index having the smallest value or an SSSG corresponding to an SSSG index having the largest value among the SSSG indexes configured in the UE 100. For example, in the example of Fig. 13, in the case of a rule in which the SSSG corresponding to the SSSG index having the smallest value is defined as the default SSSG, the UE 100 (the controller 120) determines the SSSG of the SSSG index #0 as the default SSSG. In the case of a rule in which the SSSG corresponding to the SSSG index having the largest value is defined as the default SSSG, the UE 100 (the controller 120) determines the SSSG of the SSSG index #4 as the default SSSG.

As described above, the UE 100 (the communicator 110) may receive, from the base station 200, correspondence relationship information indicating a correspondence relationship between the SSSG index configured in the UE 100 and the value set in the SSSG information field in the switching instruction DCI. The predetermined rule may be a rule that determines, as a default SSSG, an SSSG corresponding to an SSSG index indicated by a specific value (for example, "0") as a value to be set in the SSSG information field in the switching instruction DCI. For example, the UE 100 (the controller 120) determines, as a default SSSG, an SSSG having an SSSG index whose value set in the SSSG information field in the switching instruction DCI is indicated by "0".

The predetermined rule may be a rule that determines, as a default SSSG, an SSSG corresponding to an SSSG index having a predetermined value (for example, an index #0) among the SSSG indexes configured in the UE 100.

The predetermined rule may be a rule that determines, as a default SSSG, an SSSG other than the SSSG for which monitoring of the PDCCH is skipped among the SSSGs configured in the UE 100. That is, the UE 100 (the controller 120) may assume that an SSSG index corresponding to PDCCH skipping is not configured as a default SSSG.

In a case where DRX is configured in the UE 100, the UE 100 (the controller 120) may apply a specific SSSG when switching is performed from a reception-off duration of the DRX to a reception-on duration thereof (active time). The predetermined rule may be a rule that determines the specific SSSG as a default SSSG. That is, the UE 100 (the controller 120) may determine, as a default SSSG, the first SSSG for monitoring the PDCCH after the reception-off duration of the DRX has elapsed.

In the fourth operation example, the UE 100 (the communicator 110) may receive a scheduling DCI indicating a radio resource allocated to the UE 100 as a switching instruction DCI. After receiving the scheduling DCI as the switching instruction DCI, the UE 100 (the controller 120) may start a switching timer at a timing when switching to one SSSG is performed (specifically, a slot that performs SSSG switching). As described in the first operation example, the UE 100 (the controller 120) can suspend the SSSG switching while the retransmission related timer related to the HARQ processing is in operation. Therefore, in a case where the scheduling DCI is received as the switching instruction DCI, the switching timer starts not at a timing when the switching instruction DCI is received but at a timing when the SSSG switching is performed.

The UE 100 (the controller 120) may use a common value as a value of a switching timer applied to two or more SSSGs among three or more SSSGs configured in the UE 100. The base station 200 (the controller 230) may configure a common value as a value of a switching timer applied to two or more SSSGs among three or more SSSGs configured in the UE 100.

The UE 100 (the controller 120) may use a dedicated value for each SSSG as the value of the switching timer applied to each of the SSSGs configured in the UE 100. The base station 200 (the controller 230) may configure a dedicated switching timer setting value for each SSSG in the UE 100.

When an SSSG of a switching destination is an SSSG corresponding to PDCCH skipping, the UE 100 (the controller 120) may start a switching timer associated with the SSSG at a timing (a slot) of starting the switching to the SSSG. In the case of the PDCCH skipping state, that is, in a designated duration during which the monitoring of the PDCCH is skipped, a resource used for the PDCCH monitoring is not occupied, and the switching to the SSSG can be started at any timing. By utilizing this advantage, it is possible to minimize an influence of a switching delay time without hindering the operation of PDCCH monitoring. It is noted that the UE 100 (the controller 120) may monitor the PDDCH assuming the default SSSG after the expiration of the switching timer.

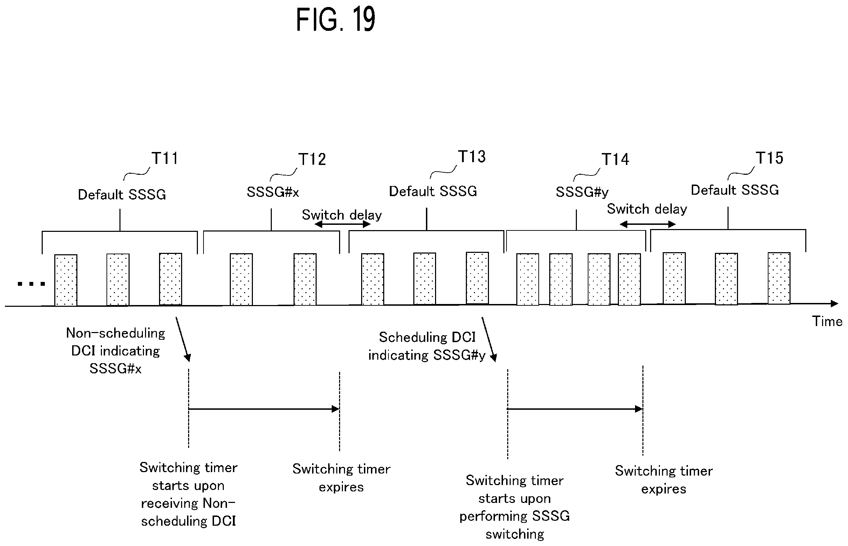

Next, a description will be given as to a specific example 1 of an operation using the switching timer according to the fourth operation example with reference to Fig. 19.

As illustrated in Fig. 19, a total of three SSSGs including a default SSSG, an SSSG#x, and an SSSG#y is configured in the UE 100. Here, it is assumed that the base station 200 (the controller 230) configures, in the UE 100, one common switching timer value for the SSSG#x and the SSSG#y which are not the default SSSG.

In a duration T 11, the UE 100 (the controller 120) monitors the PDCCH using the default SSSG. The UE 100 (the communicator 110) receives a non-scheduling DCI instructing switching to the SSSG#x in the last search space of the duration T11. Since HARQ processing does not occur in the case of the non-scheduling DCI, the UE 100 (the controller 120) starts a switching timer when the non-scheduling DCI is received.

In a duration T12, the UE 100 (the controller 120) monitors the PDCCH using the SSSG#x while the switching timer is running. The SSSG#x is an SSSG having a longer search space period than the default SSSG. When the switching timer expires, the UE 100 (the controller 120) switches to the default SSSG after a switching delay time (switch delay) has elapsed.

In a duration T13, the UE 100 (the controller 120) monitors the PDCCH using the default SSSG. The UE 100 (the communicator 110) receives a scheduling DCI instructing switching to the SSSG#y in the last search space of the duration T13. Since HARQ processing occurs in the case of the scheduling DCI, the UE 100 (the controller 120) does not start the switching timer at the time of receiving the scheduling DCI, and starts the switching timer at the timing (the slot) when the switching to the SSSG#y is executed.

In a duration T14, the UE 100 (the controller 120) monitors the PDCCH using the SSSG#y while the switching timer is running. The SSSG#y is an SSSG having a shorter search space period than the default SSSG. When the switching timer expires, the UE 100 (the controller 120) switches to the default SSSG after a switching delay time (switch delay) has elapsed. Then, in a duration T15, the UE 100 (the controller 120) monitors the PDCCH using the default SSSG.

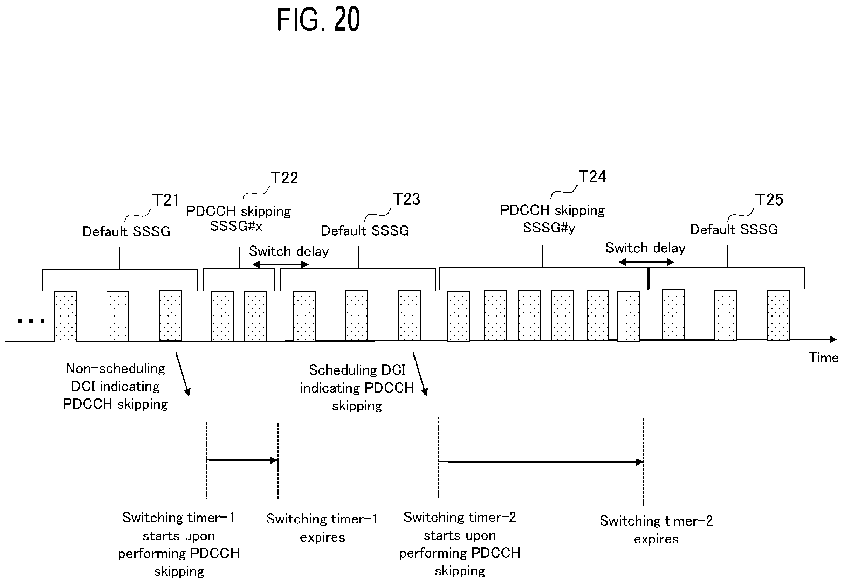

Next, a description will be given as to a specific example 2 of an operation using the switching timer according to the fourth operation example with reference to Fig. 20.

As illustrated in Fig. 20, a total of three SSSGs including a default SSSG, an SSSG#x for PDCCH skipping, and an SSSG#y for PDCCH skipping is configured in the UE 100. Here, it is assumed that the base station 200 (the controller 230) configures, in the UE 100, a dedicated switching timer value for each of the SSSG#x and the SSSG#y which are not the default SSSG.

In a duration T21, the UE 100 (the controller 120) monitors the PDCCH using the default SSSG. The UE 100 (the communicator 110) receives a non-scheduling DCI instructing switching to the SSSG#x in the last search space of the duration T11. Since the SSSG#x serving as a switching destination is an SSSG corresponding to the PDCCH skipping, the UE 100 (the controller 120) starts a switching timer (a switching timer-1) independently configured for the SSSG#x at a timing (a slot) when the switching to the SSSG#x is executed.

In a duration T22, the UE 100 (the controller 120) skips monitoring of the PDCCH while the switching timer-1 is running. When the switching timer-1 expires, the UE 100 (the controller 120) switches to the default SSSG after a switching delay time (switch delay) has elapsed.

In a duration T23, the UE 100 (the controller 120) monitors the PDCCH using the default SSSG. The UE 100 (the communicator 110) receives a scheduling DCI instructing switching to the SSSG#y in the last search space of the duration T23. Since the SSSG#x serving as the switching destination is the SSSG corresponding to the PDCCH skipping, the UE 100 (the controller 120) starts a switching timer (a switching timer-2) independently configured for the SSSG#y at a timing (a slot) when the switching to the SSSG#y is executed. A timer value of the switching timer-2 is larger than the timer value of the switching timer-1.

In a duration T24, the UE 100 (the controller 120) skips monitoring of the PDCCH while the switching timer-2 is running. When the switching timer-2 expires, the UE 100 (the controller 120) switches to the default SSSG after a switching delay time (switch delay) has elapsed. Then, in a duration T25, the UE 100 (the controller 120) monitors the PDCCH using the default SSSG.

As described above, according to the fourth operation example, even in a case where the UE 100 performs switching of an SSSG on a timer basis, and three or more SSSGs can be configured in the UE 100, the base station 200 can grasp the SSSG serving as a switching destination by defining a default SSSG. Therefore, it is possible to perform switching on a timer basis for various SSSGs.

### (Other embodiments)

The first operation example to the fourth operation example described above may be performed separately and independently, or may be performed by combining two or more operation examples. Furthermore, the steps in the first operation example to the fourth operation example are not necessarily executed in time series in the order described in the flow diagram or the sequence diagram. For example, the steps in the operation may be performed in an order different from the order described as the flow diagram or the sequence diagram, or may be performed in parallel. In addition, some of the steps in the operation may be removed and additional steps may be added to the processing. Furthermore, each operation flow described above is not necessarily implemented separately and independently and a combination of two or more operation flows can be implemented. For example, some steps of one operation flow may be added to another operation flow, or some steps of one operation flow may be replaced with some steps of another operation flow.

In the embodiments, the base station 200 may include a plurality of units. The plurality of units may include a first unit that hosts a higher layer included in the protocol stack and a second unit that hosts a lower layer included in the protocol stack. The higher layer may include an RRC layer, an SDAP layer, and a PDCP layer, and the lower layer may include an RLC layer, an MAC layer, and a PHY layer. The first unit may be a central unit (CU), and the second unit may be a distributed unit (DU). The plurality of units may include a third unit that performs processing below the PHY layer. The second unit may perform processing above the PHY layer. The third unit may be a radio unit (RU). The base station 200 may be one of the plurality of units, and may be connected to another unit of the plurality of units. In addition, the base station 200 may be an integrated access and backhaul (IAB) donor or an IAB node.

In the above-described embodiments, the mobile communication system based on NR has been described as an example of the mobile communication system 1. However, the mobile communication system 1 is not limited to this example. The mobile communication system 1 may be a system conforming to TS of any of LTE and another generation system (for example, the sixth generation) of the 3GPP standard. The base station 200 may be an eNB that provides E-UTRA user plane and control plane protocol termination towards the UE 100 in LTE. The mobile communication system 1 may be a system conforming to TS having a standard other than the 3GPP standard.

A program may be provided to cause a computer to execute each processing performed by the UE 100 or the base station 200. The program may be recorded on a computer readable medium. By using the computer readable medium, the program can be installed in the computer. Here, the computer readable medium on which the program is recorded may be a non-transitory recording medium. The non-transitory recording medium is not particularly limited, but may be, for example, a recording medium such as a CD-ROM or a DVD-ROM. Furthermore, circuits that execute respective types of processing to be performed by the UE 100 or the base station 200 may be integrated, and at least a part of the UE 100 or the base station 200 may be configured as a semiconductor integrated circuit (chipset and system-on-a-chip (SOC)).

In the above-described embodiment, "transmit" may mean to perform processing of at least one layer in a protocol stack used for transmission, or may mean to physically transmit a signal wirelessly or by wire. Alternatively, "transmit" may mean a combination of performing the processing of at least one layer and physically transmitting a signal wirelessly or by wire. Similarly, "receive" may mean to perform processing of at least one layer in a protocol stack used for reception, or may mean to physically receive a signal wirelessly or by wire. Alternatively, "receive" may mean a combination of performing the processing of at least one layer and physically receiving a signal wirelessly or by wire. Similarly, "obtain/acquire" may mean to obtain/acquire information from stored information. In addition, "obtain/acquire" may mean to obtain/acquire information from information received from another node. Alternatively, "obtain/acquire" may mean to obtain/acquire information by generating the information. Similarly, "include" and "comprise" do not mean to include only the listed items, but may include only the listed items. Further, "include" and "comprise" mean that additional items may be included in addition to the listed items. Similarly, in the present disclosure, "or" does not mean exclusive OR but means OR.

Although the present disclosure has been described in accordance with examples, it is understood that the present disclosure is not limited to the examples and structures. The present disclosure also includes various modification examples and modifications within an equivalent range. In addition, various combinations and modes, and other combinations and modes including only one element, more elements, or less elements are also within the scope and idea of the present disclosure.

Features of the present disclosure are as follows.

### [Supplementary note 1]

A communication apparatus (100) comprising:
a communicator (110) configured to receive, from a base station (200), a radio resource control (RRC) message including information configuring a skipping duration during which monitoring of a physical downlink control channel (PDCCH) is skipped, and to receive, from the base station (200) and through the PDCCH, downlink control information (DCI) including an information field related to the monitoring of the PDCCH; and
a controller (120) configured to control, based on a value set in the information field, skipping of the monitoring of the PDCCH over the skipping duration, wherein
the controller (120) is configured to perform control so as not to execute the skipping of the monitoring of the PDCCH while a timer is in operation, the timer being related to retransmission for a discontinuous reception (DRX) operation.

### [Supplementary note 2]

The communication apparatus (100) according to supplementary note 2, wherein
the controller (120) is configured to perform control so as to execute the skipping of the monitoring of the PDCCH when the timer related to the retransmission for the discontinuous reception (DRX) operation is not in operation.

### [Supplementary note 3]

The communication apparatus (100) according to supplementary note 1 or 2, wherein
the timer related to the retransmission is a timer that defines a maximum duration so as to receive permission for retransmission of an uplink.

### [Supplementary note 4]

The communication apparatus (100) according to any one of supplementary notes 1 to 3, wherein
the control of the skipping of the monitoring of the PDCCH is performed for a DCI format having a CRC scrambled with a configured scheduling radio network temporary identifier (CS-RNTI), the DCI format being used to schedule a physical uplink shared channel (PUSCH).

### [Supplementary note 5]

Abase station (200) comprising:
a communicator (210) configured to transmit, to a communication apparatus (100), a radio resource control (RRC) message including information configuring a skipping duration during which monitoring of a physical downlink control channel (PDCCH) is skipped, and to transmit, to the communication apparatus (100) and through the PDCCH, downlink control information (DCI) including an information field related to the monitoring of the PDCCH; and
a controller (230) configured to control, based on a value set in the information field, skipping of the monitoring of the PDCCH over the skipping duration, wherein
the controller (230) is configured to perform control so as not to execute the skipping of the monitoring of the PDCCH while a timer is in operation, the timer being related to retransmission for a discontinuous reception (DRX) operation.

### [Supplementary note 6]

The base station (200) according to supplementary note 5, wherein
the controller (230) is configured to perform control so as to execute the skipping of the monitoring of the PDCCH when the timer related to the retransmission for the discontinuous reception (DRX) operation is not in operation.

### [Supplementary note 7]

The base station (200) according to supplementary note 5 or 6, wherein
the timer related to the retransmission is a timer that defines a maximum duration so as to receive permission for retransmission of an uplink.

### [Supplementary note 8]

The base station (200) according to any one of supplementary notes 5 to 7, wherein
the control of the skipping of the monitoring of the PDCCH is performed for a DCI format having a CRC scrambled with a configured scheduling radio network temporary identifier (CS-RNTI), the DCI format being used to schedule a physical uplink shared channel (PUSCH).

### [Supplementary note 9]

A method executed by a communication apparatus (100), the method comprising the steps of:
receiving, from a base station (200), a radio resource control (RRC) message including information configuring a skipping duration during which monitoring of a physical downlink control channel (PDCCH) is skipped;
receiving, from the base station (200) and through the PDCCH, downlink control information (DCI) including an information field related to the monitoring of the PDCCH; and
controlling, based on a value set in the information field, skipping of the monitoring of the PDCCH over the skipping duration, wherein
control is performed, in the controlling step, so as not to execute the skipping of the monitoring of the PDCCH while a timer is in operation, the timer being related to retransmission for a discontinuous reception (DRX) operation.

### [Supplementary note 10]

The method according to supplementary note 9, wherein
control is performed, in the step of controlling the skipping of the monitoring of the PDCCH, so as to execute the skipping of the monitoring of the PDCCH when the timer related to the retransmission for the discontinuous reception (DRX) operation is not in operation.

### [Supplementary note 11]

The method according to supplementary note 9 or 10, wherein
the timer related to the retransmission is a timer that defines a maximum duration so as to receive permission for retransmission of an uplink.

### [Supplementary note 12]

The method according to any one of supplementary notes 9 to 11, wherein
the control of the skipping of the monitoring of the PDCCH is performed for a DCI format having a CRC scrambled with a configured scheduling radio network temporary identifier (CS-RNTI), the DCI format being used to schedule a physical uplink shared channel (PUSCH).

### [Supplementary note 13]

A method executed by a base station (200), the method comprising the steps of:
transmitting, to a communication apparatus (100), a radio resource control (RRC) message including information configuring a skipping duration during which monitoring of a physical downlink control channel (PDCCH) is skipped;
transmitting, to the communication apparatus (100) and through the PDCCH, downlink control information (DCI) including an information field related to the monitoring of the PDCCH; and
controlling, based on a value set in the information field, skipping of the monitoring of the PDCCH over the skipping duration, wherein
control is performed, in the controlling step, so as not to execute the skipping of the monitoring of the PDCCH while a timer is in operation, the timer being related to retransmission for a discontinuous reception (DRX) operation.

### [Supplementary note 14]

The method according to supplementary note 13, wherein
control is performed, in the step of controlling the skipping of the monitoring of the PDCCH, so as to execute the skipping of the monitoring of the PDCCH when the timer related to the retransmission for the discontinuous reception (DRX) operation is not in operation.

### [Supplementary note 15]

The method according to supplementary note 13 or 14, wherein
the timer related to the retransmission is a timer that defines a maximum duration so as to receive permission for retransmission of an uplink.

### [Supplementary note 16]

The method according to any one of supplementary notes 13 to 15, wherein
the control of executing the skipping of the monitoring of the PDCCH is performed for a DCI format having a CRC scrambled with a configured scheduling radio network temporary identifier (CS-RNTI), the DCI format being used to schedule a physical uplink shared channel (PUSCH).

## Claims

1. A communication apparatus (100) comprising:
a communicator (110) configured to receive, from a base station (200), a radio resource control (RRC) message including information configuring a skipping duration during which monitoring of a physical downlink control channel (PDCCH) is skipped, and to receive, from the base station (200) and through the PDCCH, downlink control information (DCI) including an information field related to the monitoring of the PDCCH; and
a controller (120) configured to control, based on a value set in the information field, skipping of the monitoring of the PDCCH over the skipping duration, wherein
the controller (120) is configured to perform control so as not to execute the skipping of the monitoring of the PDCCH while a timer is in operation, the timer being related to retransmission for a discontinuous reception (DRX) operation.

2. The communication apparatus (100) according to claim 1, wherein
the controller (120) is configured to perform control so as to execute the skipping of the monitoring of the PDCCH when the timer related to the retransmission for the discontinuous reception (DRX) operation is not in operation.

3. The communication apparatus (100) according to claim 1 or 2, wherein
the timer related to the retransmission is a timer that defines a maximum duration so as to receive permission for retransmission of an uplink.

4. The communication apparatus (100) according to claim 1 or 2, wherein
the control of the skipping of the monitoring of the PDCCH is performed for a DCI format having a CRC scrambled with a configured scheduling radio network temporary identifier (CS-RNTI), the DCI format being used to schedule a physical uplink shared channel (PUSCH).

5. A base station (200) comprising:
a communicator (210) configured to transmit, to a communication apparatus (100), a radio resource control (RRC) message including information configuring a skipping duration during which monitoring of a physical downlink control channel (PDCCH) is skipped, and to transmit, to the communication apparatus (100) and through the PDCCH, downlink control information (DCI) including an information field related to the monitoring of the PDCCH; and
a controller (230) configured to control, based on a value set in the information field, skipping of the monitoring of the PDCCH over the skipping duration, wherein
the controller (230) is configured to perform control so as not to execute the skipping of the monitoring of the PDCCH while a timer is in operation, the timer being related to retransmission for a discontinuous reception (DRX) operation.

6. The base station (200) according to claim 5, wherein
the controller (230) is configured to perform control so as to execute the skipping of the monitoring of the PDCCH when the timer related to the retransmission for the discontinuous reception (DRX) operation is not in operation.

7. The base station (200) according to claim 5 or 6, wherein
the timer related to the retransmission is a timer that defines a maximum duration so as to receive permission for retransmission of an uplink.

8. The base station (200) according to claim 5 or 6, wherein
the control of the skipping of the monitoring of the PDCCH is performed for a DCI format having a CRC scrambled with a configured scheduling radio network temporary identifier (CS-RNTI), the DCI format being used to schedule a physical uplink shared channel (PUSCH).

9. A method executed by a communication apparatus (100), the method comprising the steps of:
receiving, from a base station (200), a radio resource control (RRC) message including information configuring a skipping duration during which monitoring of a physical downlink control channel (PDCCH) is skipped;
receiving, from the base station (200) and through the PDCCH, downlink control information (DCI) including an information field related to the monitoring of the PDCCH; and
controlling, based on a value set in the information field, skipping of the monitoring of the PDCCH over the skipping duration, wherein
control is performed, in the controlling step, so as not to execute the skipping of the monitoring of the PDCCH while a timer is in operation, the timer being related to retransmission for a discontinuous reception (DRX) operation.

10. The method according to claim 9, wherein
control is performed, in the step of controlling the skipping of the monitoring of the PDCCH, so as to execute the skipping of the monitoring of the PDCCH when the timer related to the retransmission for the discontinuous reception (DRX) operation is not in operation.

11. The method according to claim 9 or 10, wherein
the timer related to the retransmission is a timer that defines a maximum duration so as to receive permission for retransmission of an uplink.

12. The method according to claim 9 or 10, wherein
the control of the skipping of the monitoring of the PDCCH is performed for a DCI format having a CRC scrambled with a configured scheduling radio network temporary identifier (CS-RNTI), the DCI format being used to schedule a physical uplink shared channel (PUSCH).

13. A method executed by a base station (200), the method comprising the steps of:
transmitting, to a communication apparatus (100), a radio resource control (RRC) message including information configuring a skipping duration during which monitoring of a physical downlink control channel (PDCCH) is skipped;
transmitting, to the communication apparatus (100) and through the PDCCH, downlink control information (DCI) including an information field related to the monitoring of the PDCCH; and
controlling, based on a value set in the information field, skipping of the monitoring of the PDCCH over the skipping duration, wherein
control is performed, in the controlling step, so as not to execute the skipping of the monitoring of the PDCCH while a timer is in operation, the timer being related to retransmission for a discontinuous reception (DRX) operation.

14. The method according to claim 13, wherein
control is performed, in the step of controlling the skipping of the monitoring of the PDCCH, so as to execute the skipping of the monitoring of the PDCCH when the timer related to the retransmission for the discontinuous reception (DRX) operation is not in operation.

15. The method according to claim 13 or 14, wherein
the timer related to the retransmission is a timer that defines a maximum duration so as to receive permission for retransmission of an uplink.

16. The method according to claim 13 or 14, wherein
the control of executing the skipping of the monitoring of the PDCCH is performed for a DCI format having a CRC scrambled with a configured scheduling radio network temporary identifier (CS-RNTI), the DCI format being used to schedule a physical uplink shared channel (PUSCH).
